(19) Europäisches Patentamt
European Patent Office
Office européen des brevets

(11) **EP 4 701 212 A1**

(12) **EUROPEAN PATENT APPLICATION**
published in accordance with Art. 153(4) EPC

(43) Date of publication:
**25.02.2026   Bulletin 2026/09**

(21) Application number: 24792605.8

(22) Date of filing: **12.04.2024**

(51) International Patent Classification (IPC):
*H04N 23/55* (2023.01)      *G03B 11/00* (2021.01)
*H04N 23/54* (2023.01)      *H04N 23/95* (2023.01)
*H04N 23/955* (2023.01)      *H04N 25/70* (2023.01)

(52) Cooperative Patent Classification (CPC):
G03B 11/00; H04N 23/54; H04N 23/55;
H04N 23/95; H04N 23/955; H04N 25/70

(86) International application number:
**PCT/JP2024/014818**

(87) International publication number:
**WO 2024/219330 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.04.2023   JP 2023070362**

(71) Applicant: **Sony Semiconductor Solutions Corporation**
**Atsugi-shi, Kanagawa 243-0014 (JP)**

(72) Inventors:
• **MORIMOTO, Akihiro**
  **Atsugi-shi, Kanagawa 243-0014 (JP)**
• **TSUCHIYAMA, Masashi**
  **Kikuchi-gun, Kumamoto 869-1102 (JP)**
• **NAGAI, Nobuyuki**
  **Atsugi-shi, Kanagawa 243-0014 (JP)**
• **TANIGUCHI, Ryouji**
  **Atsugi-shi, Kanagawa 243-0014 (JP)**

(74) Representative: **MFG Patentanwälte Meyer-Wildhagen Meggle-Freund Gerhard PartG mbB**
**Amalienstraße 62**
**80799 München (DE)**

(54)   **IMAGING DEVICE**

(57)   An imaging device according to the present disclosure includes a solid-state imaging element, an optical modulation element, and a first light shielding member. The solid-state imaging element has an effective area in which a plurality of pixels are located in a matrix. The optical modulation element is located on a light incident side of the effective area and modulates incident light. The first light shielding member is located flush with the optical modulation element so as to surround the periphery of the optical modulation element in plan view.

Fig. 7

# EP 4 701 212 A1

## Description

### Technical Field

The present disclosure relates to an imaging device.

### Background Art

In recent years, development of a lensless camera that can photograph an image without using a lens has been progressing. A known typical camera photographs an image by inputting light through a lens to an image sensor that is an imaging element. On the other hand, the lensless camera uses a mask, instead of a lens, having a two dimensional pattern of a light transmitting region and a light non-transmitting region or a mechanism for modulating light, such as a diffraction grating, to input light through the mask to the image sensor.

Thus, a picture through the mask is photographed by the image sensor. By performing predetermined signal processing on imaging data through the mask, a two dimensional image corresponding to a photographing scene similar to that of a typical camera can be generated. Since the lensless camera does not need a lens, a size reduction, a weight reduction, a cost reduction, non-planarization, and the like in an imaging device can be achieved (for example, see PTL 1).

### Citation List

#### Patent Literature

PTL 1: WO 2016/123529

### Summary

#### Technical Problem

The present disclosure proposes an imaging device that can improve an image quality.

#### Solution to Problem

According to the present disclosure, an imaging device is provided. The imaging device includes a solid-state imaging element, an optical modulation element, and a first light shielding member. The solid-state imaging element has an effective area in which a plurality of pixels are located in a matrix. The optical modulation element is located on a light incident side of the effective area and modulates incident light. The first light shielding member is located flush with the optical modulation element so as to surround the periphery of the optical modulation element in plan view.

### Brief Description of Drawings

[Fig. 1]

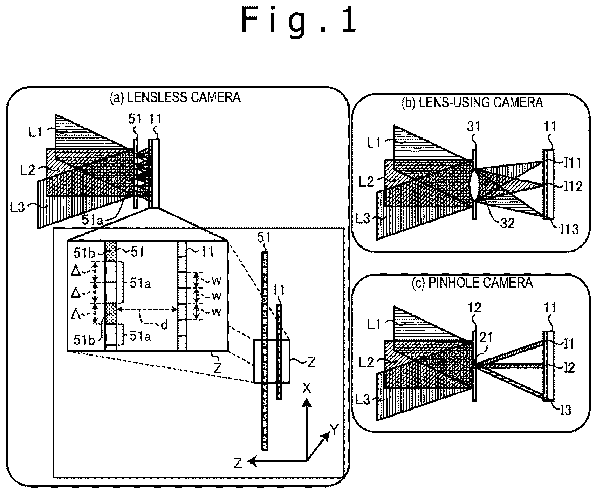

Fig. 1 is diagrams explaining a photographing principle of a lensless camera.
[Fig. 2]

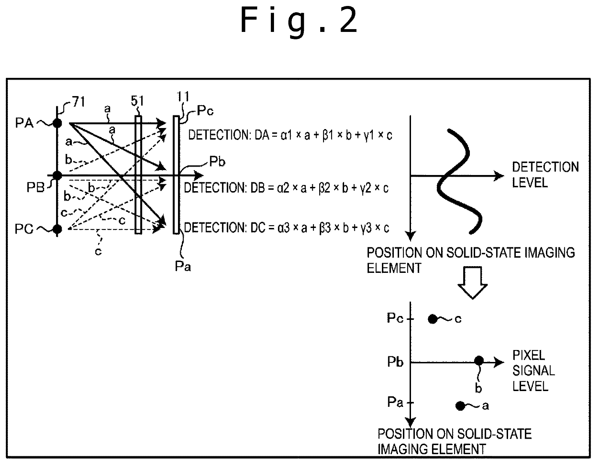

Fig. 2 is a diagram explaining a photographing principle of a lensless camera.
[Fig. 3]

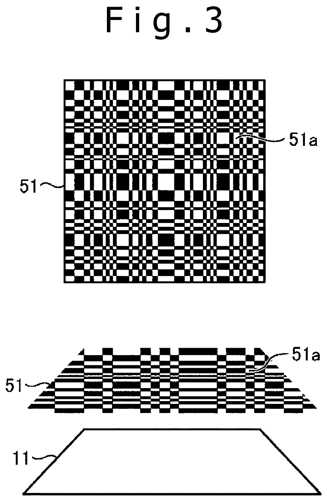

Fig. 3 is diagrams explaining an example of a mask of a lensless camera.
[Fig. 4]

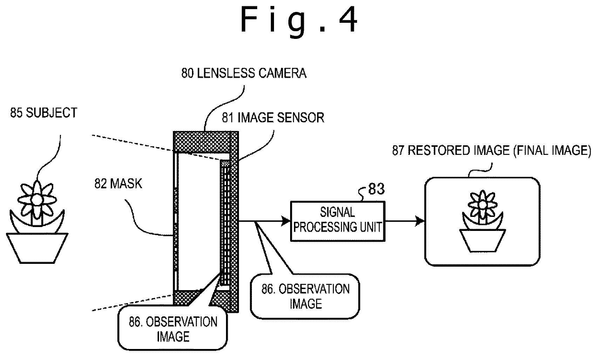

Fig. 4 is a diagram explaining an example of photographing processing in a lensless camera.
[Fig. 5]

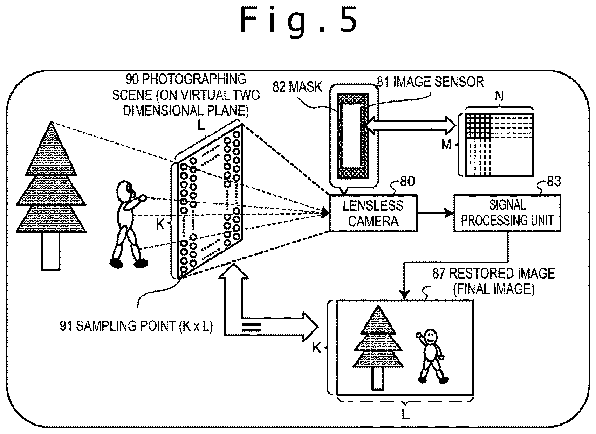

Fig. 5 is a diagram explaining photographing processing and image restoration processing in the lensless camera.
[Fig. 6]

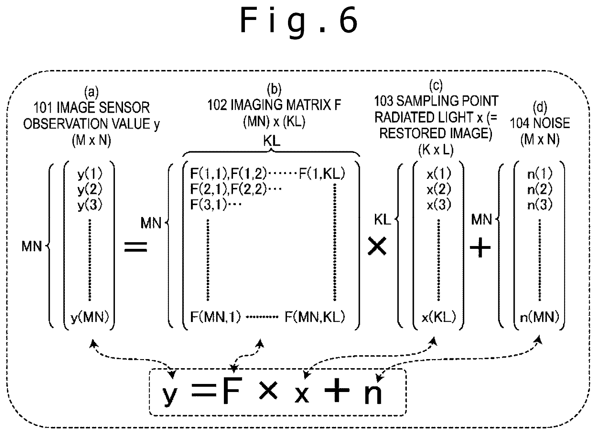

Fig. 6 is a diagram explaining an example of a correspondence relationship between a photographed image by the lensless camera and a restored image.
[Fig. 7]

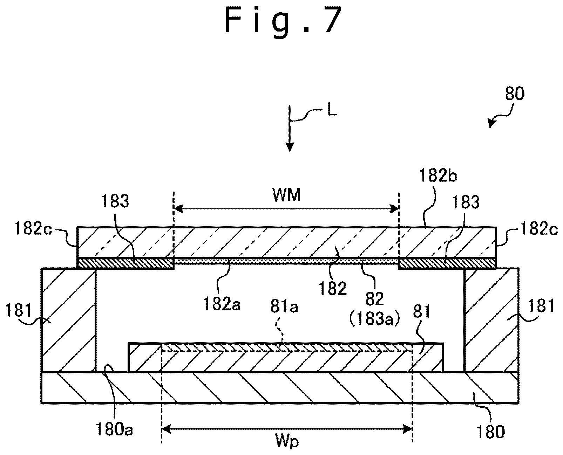

Fig. 7 is a cross-sectional view depicting an example of a configuration of the lensless camera according to a first embodiment of the present disclosure.

[Fig. 8]

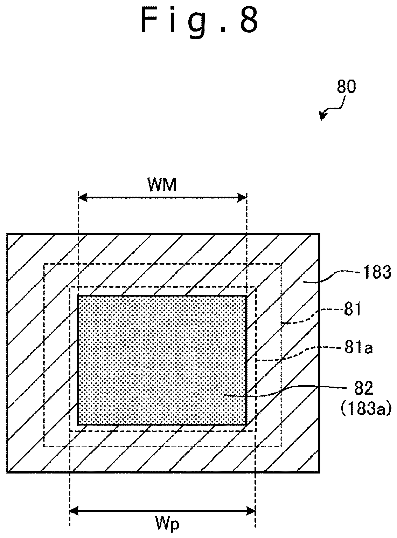

Fig. 8 is a plan view depicting an example of a configuration of the lensless camera according to the first embodiment of the present disclosure.
[Fig. 9]

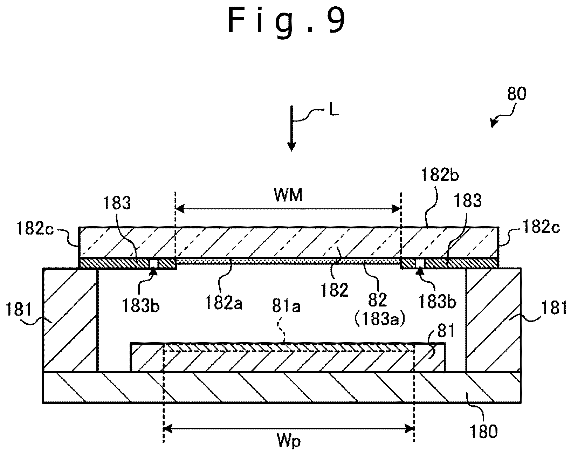

Fig. 9 is a cross-sectional view depicting an example of a configuration of the lensless camera according to a first modification of the first embodiment of the present disclosure.
[Fig. 10]

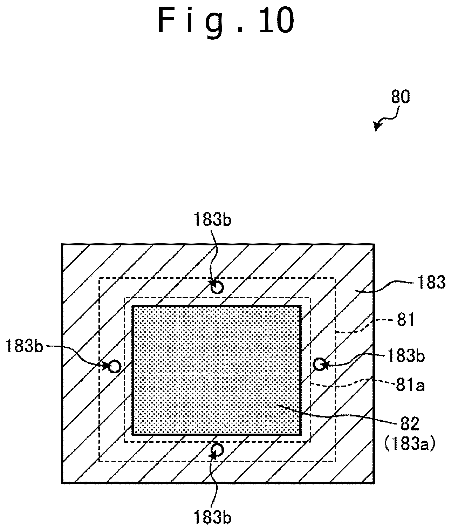

Fig. 10 is a plan view depicting an example of a configuration of the lensless camera according to the first modification of the first embodiment of the present disclosure.
[Fig. 11]

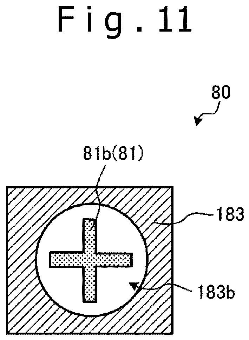

Fig. 11 is a cross-sectional view depicting an example of a visually recognized state of a positioning mark in the lensless camera according to the first modification of the first embodiment of the present disclosure.
[Fig. 12]

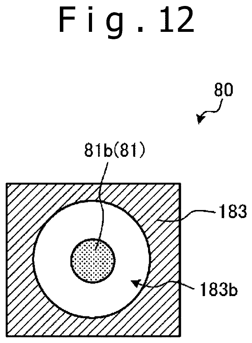

Fig. 12 is a cross-sectional view depicting an example of a visually recognized state of a positioning mark in the lensless camera according to the first modification of the first embodiment of the present disclosure.
[Fig. 13]

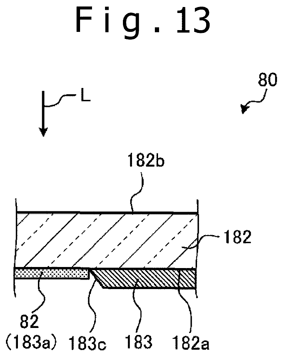

Fig. 13 is an enlarged cross-sectional view depicting an example of a configuration of the lensless camera according to a second modification of the first embodiment of the present disclosure.
[Fig. 14]

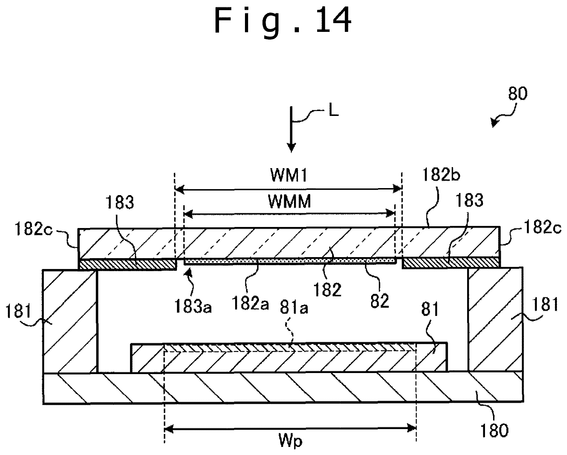

Fig. 14 is a cross-sectional view depicting an example of a configuration of the lensless camera according to a third modification of the first embodiment of the present disclosure.
[Fig. 15]

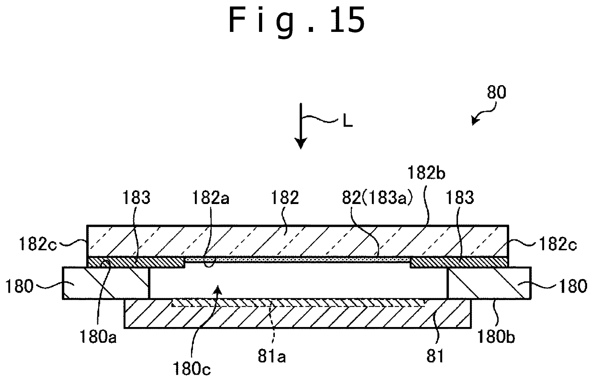

Fig. 15 is a cross-sectional view depicting an example of a configuration of the lensless camera according to a fourth modification of the first embodiment of the present disclosure.
[Fig. 16]

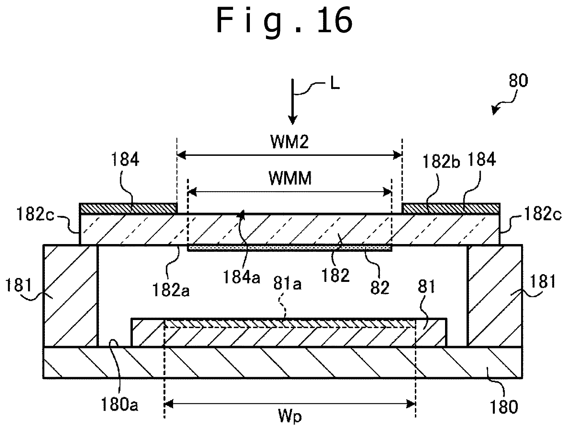

Fig. 16 is a cross-sectional view depicting an example of a configuration of a lensless camera according to a second embodiment of the present disclosure.
[Fig. 17]

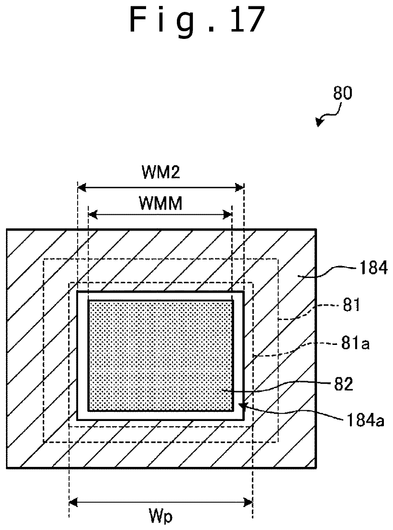

Fig. 17 is a plan view depicting an example of a configuration of the lensless camera according to the second embodiment of the present disclosure.
[Fig. 18]

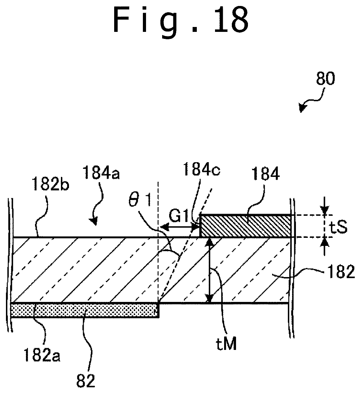

Fig. 18 is an enlarged cross-sectional view depicting an example of a configuration of the lensless camera according to the second embodiment of the present disclosure.
[Fig. 19]

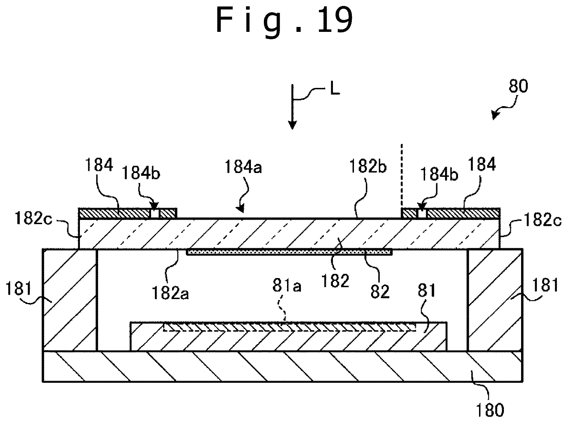

Fig. 19 is a cross-sectional view depicting an example of a configuration of the lensless camera according to a first modification of the second embodiment of the present disclosure.
[Fig. 20]

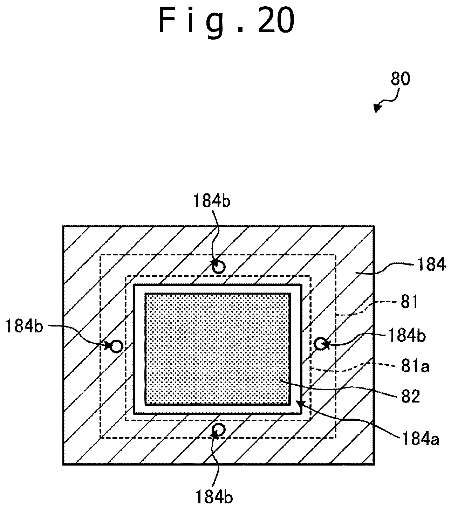

Fig. 20 is a plan view depicting an example of a configuration of the lensless camera according to the first modification of the second embodiment of the present disclosure.
[Fig. 21]

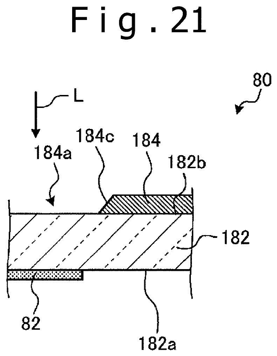

Fig. 21 is an enlarged cross-sectional view depicting an example of a configuration of the lensless camera according to a second modification of the second embodiment of the present disclosure.
[Fig. 22]

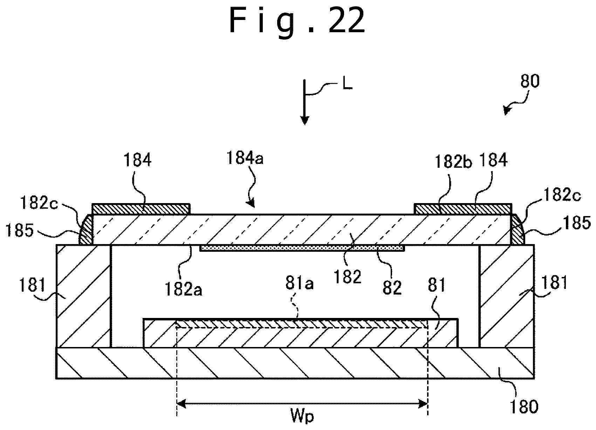

Fig. 22 is a cross-sectional view depicting an example of a configuration of the lensless camera according to a third modification of the second embodiment of the present disclosure.
[Fig. 23]

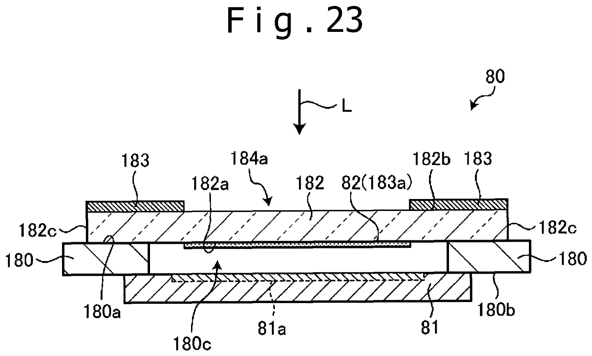

Fig. 23 is a cross-sectional view depicting an example of a configuration of the lensless camera according to a fourth modification of the second embodiment of the present disclosure.
[Fig. 24]

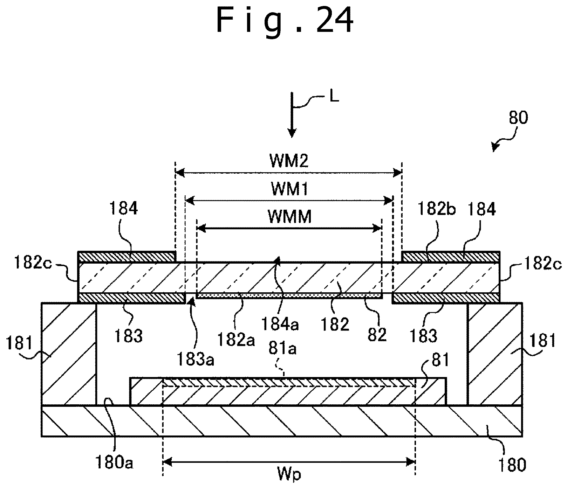

Fig. 24 is a cross-sectional view depicting an example of a configuration of a lensless camera according to a third embodiment of the present disclosure.
[Fig. 25]

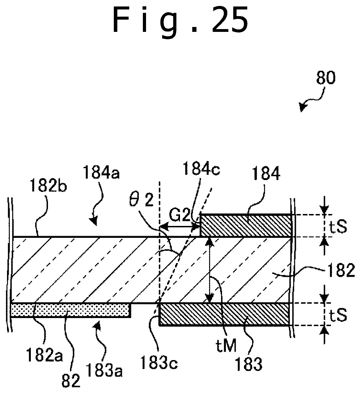

Fig. 25 is an enlarged cross-sectional view depicting an example of a configuration of the lensless camera according to the third embodiment of the present disclosure.
[Fig. 26]

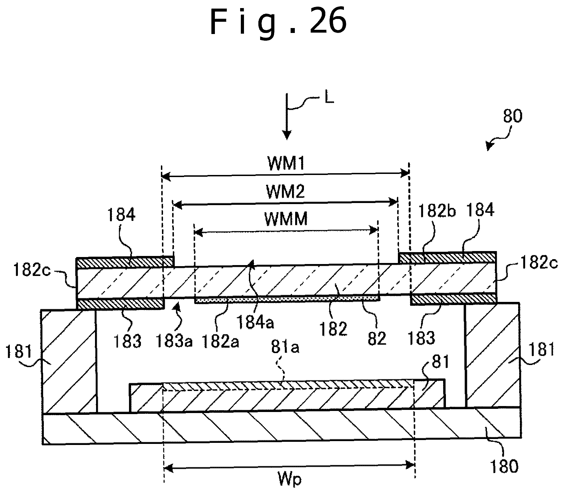

Fig. 26 is a cross-sectional view depicting an example of a configuration of the lensless camera according to a first modification of the third embodiment of the present disclosure.
[Fig. 27]

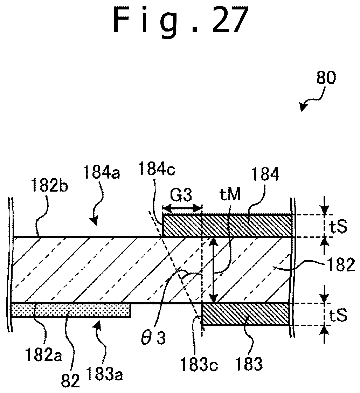

Fig. 27 is an enlarged cross-sectional view depicting an example of a configuration of the lensless camera according to the first modification of the third embodiment of the present disclosure.
[Fig. 28]

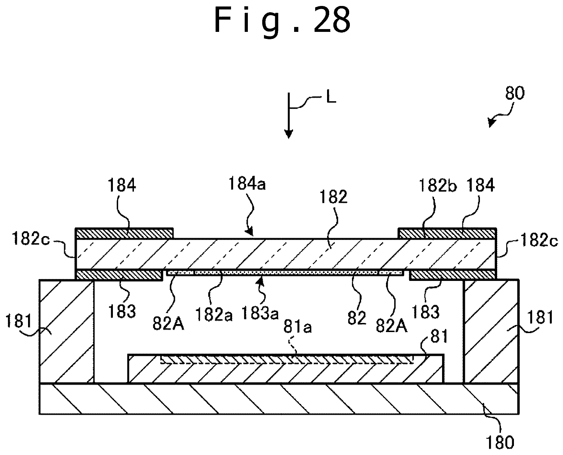

Fig. 28 is a cross-sectional view depicting an example of a configuration of the lensless camera according to a second modification of the third embodiment of the present disclosure.
[Fig. 29]

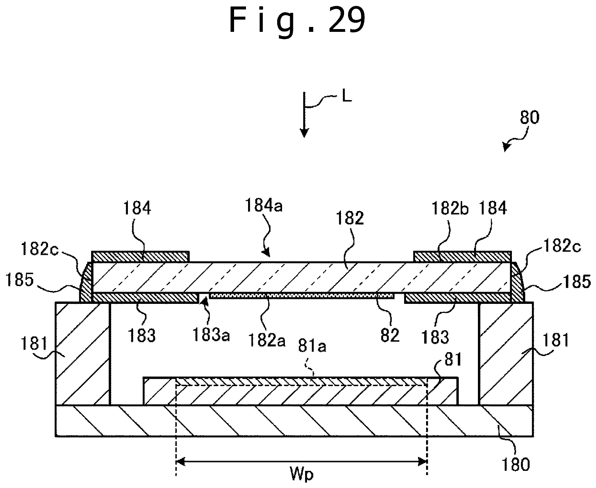

Fig. 29 is a cross-sectional view depicting an example of a configuration of the lensless camera according to a third modification of the third embodiment of the present disclosure.
[Fig. 30]

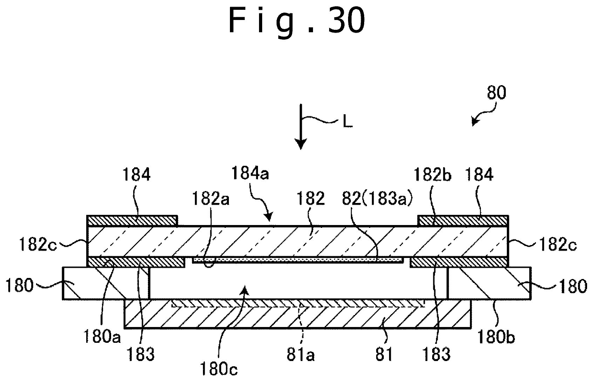

Fig. 30 is a cross-sectional view depicting an example of a configuration of the lensless camera according to a fourth modification of the third embodiment of the present disclosure.
[Fig. 31]

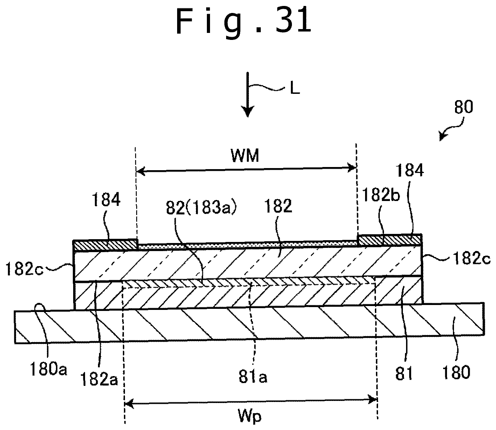

Fig. 31 is a cross-sectional view depicting an example of a configuration of a lensless camera according to a fourth embodiment of the present disclosure.
[Fig. 32]

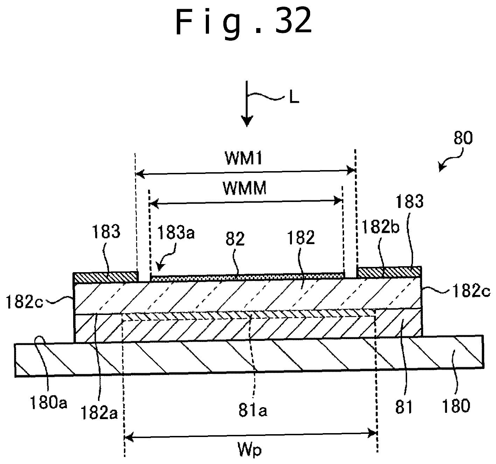

Fig. 32 is a cross-sectional view depicting an example of a configuration of the lensless camera according to a first modification of the fourth embodiment of the present disclosure.
[Fig. 33]

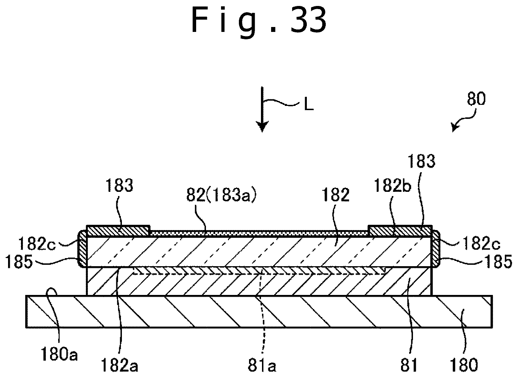

Fig. 33 is a cross-sectional view depicting an example of a configuration of the lensless camera according to a second modification of the fourth embodiment of the present disclosure.
[Fig. 34]

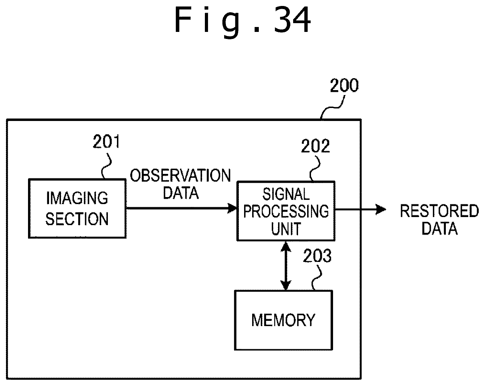

Fig. 34 is a block diagram depicting an example of a configuration of an imaging device of the present disclosure.

Description of Embodiments

Hereinafter, each embodiment of the present disclosure will be explained in detail with reference to the drawings. In each embodiment which will be described below, the same portions are denoted by the same reference numerals, and redundant explanation thereof will be omitted.

In each embodiment which will be described below, expressions such as "horizontal", "vertical", "parallel", or "flush" may be used, but these expressions need not strictly mean "horizontal", "vertical", "parallel", or "flush". That is, each of the above-described expressions allows for deviations in, for example, manufacturing accuracy and installation accuracy.

In recent years, development of a lensless camera that can photograph an image without using a lens has been progressing. A known typical camera photographs an image by inputting light through a lens to an image sensor that is an imaging element. On the other hand, the lensless camera uses a mask, instead of a lens, having a two dimensional pattern of a light transmitting region and a light non-transmitting region or a mechanism for modulating light, such as a diffraction grating, to input light through the mask to the image sensor.

Thus, a picture through the mask is photographed by the image sensor. By performing predetermined signal processing on imaging data through the mask, a two dimensional image corresponding to a photographing scene similar to that of a typical camera can be generated. Since the lensless camera does not need a lens, a size reduction, a weight reduction, a cost reduction, non-planarization, and the like in an imaging device can be achieved.

On the other hand, in the above-described known technique, since no light shielding object is provided at the periphery of the mask, light from the outside of the mask enters the image sensor, and this becomes a noise. Thus, there is a concern that an image quality of the two dimensional image corresponding to the photographing scene is deteriorated.

Thus, it is expected to realize a lensless camera that can solve the above-described concern and improve the image quality of the two dimensional image.

Overview and Principle of Lensless Camera

Before explaining the configuration of the present disclosure, an overview of the lensless camera will be explained by comparison with a configuration of a typical imaging device. Figs. 1 and 2 are diagrams explaining a photographing principle of the lensless camera.

As the configuration of the typical imaging device, for example, a pinhole camera is exemplified as depicted in a lower right part of Fig. 1.

The pinhole camera includes a pinhole 21 provided as a hole with respect to a light shielding film 12, and the image sensor 11. In the case of the pinhole camera, as depicted in the lower right part of Fig. 1, light beams L1 to L3 emitted from a respective one of different light sources on a subject surface are transmitted through the pinhole 21 and imaged as pictures on pixels I1 to I3, respectively, on the image sensor (solid-state imaging element) 11.

That is, in the case of the pinhole camera, in the image sensor 11, a picture is image-formed by a light beam for one pixel among the light beams L1 to L3 emitted from the respective light sources, and the light beam is incident on each pixel on the image sensor 11. Thus, an imaged image is imaged as a dark image in the pinhole camera.

In addition, as a configuration of another typical imaging device, for example, as depicted in an upper right part of Fig. 1, a lens-using camera is exemplified.

In the lens-using camera, an imaging lens 32 is provided at the center of a light shielding film 31. The imaging lens 32 condenses the light beams L1 to L3 as indicated by light beams I11 to I13, and image-forms respective pictures on the image sensor 11, which are imaged by the image sensor 11.

In the case of the lens-using camera, in the image sensor 11, a picture formed of light having a light intensity that is the total light intensity of the light beams L1 to L3 is image-formed and incident on the image sensor 11, and thus, the image is imaged as an image having a sufficient light amount in each pixel of the image sensor 11.

In the lens-using camera, by using the imaging lens 32, a set of point light sources constitutes a subject. That is, the lens-using camera images the subject that is image-formed by condensing light beams emitted from a plurality of point light sources on a subject surface.

As explained with reference to the upper right part of Fig. 1, the role of the imaging lens 32 is to guide each light beam emitted from a respective one of the point light sources, that is diffused light, onto the image sensor 11. Thus, in the lens-using camera, a picture corresponding to a final image is image-formed on the image sensor 11, and an image formed of a detection signal detected in each pixel on the image sensor 11 becomes an imaged image in which the picture is image-formed.

However, in the lens-using camera, since the size of the imaging device is determined by an imaging lens and a focal length of an imaging lens, there is a limit to the reduction in size of the lens-using camera.

Thus, as depicted in an upper left part of Fig. 1, it is considered that the subject on the subject surface is imaged using the image sensor 11 and a mask 51 without providing an imaging lens or a pinhole.

In the lensless camera depicted in the upper left part of Fig. 1, the mask 51 including opening portions 51a having a plurality of sizes is provided in front of the image sensor 11. In the lensless camera, the light beams L1 to L3 each from a respective one of the light sources are modulated, incident on an imaging surface of the image sensor 11, and received by a respective one of the pixels on the image sensor 11.

Here, in the mask 51, as depicted in a lower left part of Fig. 1, the opening portions 51a each having a size randomly set in units of a unit size Δ in a horizontal direction and a vertical direction and light shielding portions 51b are provided. Thus, a mask pattern is formed on the mask 51. The unit size Δ is at least larger than the pixel size of the image sensor 11.

A gap with a minute distance d is provided between the image sensor 11 and the mask 51. In the lower left part of Fig. 1, a pitch between the pixels on the image sensor 11 is w. In the lensless camera having such a configuration, the light beams L1 to L3 are modulated and incident on the image sensor 11, based on the sizes of the unit size Δ and the distance d.

More specifically, the light sources of the light beams L1 to L3 in the upper left part of Fig. 1 are, for example, point light sources PA, PB, and PC, respectively, as depicted in an upper left part of Fig. 2. It is also assumed that light beams having light intensities a, b, and c are incident on positions Pa, Pb, and Pc, respectively, on the image sensor 11, on which the light beams transmitting through the mask 51 are incident.

In the case of the lensless camera, as depicted in the upper left part of Fig. 2, incident light is modulated by the opening portions 51a randomly set in the mask 51, and thus a detection sensitivity of each pixel has directivity according to an incident angle. Here, "the detection sensitivity of each pixel with the incident angle directivity" means that light receiving sensitivity characteristics according to the incident angle of the incident light are provided to be different according to a region on the image sensor 11.

That is, when it is assumed that the light sources constituting a subject surface 71 are point light sources, light beams emitted from the same point light source and having the same light intensity are incident on the image sensor 11. On the other hand, in the image sensor 11, the incident angle changes for each region on the imaging surface of the image sensor 11 by being modulated by the mask 51.

The incident angle of the incident light is changed according to the region on the image sensor 11 by the mask 51, and thus the detection sensitivity of each pixel has the incident angle directivity. Thus, even the light beams having the same light intensity are detected with different sensitivities for each region on the image sensor 11 by the mask 51 provided in front of the imaging surface of the image sensor 11. Thus, in the lensless camera, detection signals having different detection signal levels for each region are detected.

More specifically, as depicted in an upper right part of Fig. 2, detection signal levels DA, DB, and DC of the pixels at the positions Pa, Pb, and Pc on the image sensor 11 are expressed by the following Equations (1) to (3), respectively.

$$DA = \alpha 1 \times a + \beta 1 \times b + \gamma 1 \times c \cdots (1)$$

$$DB = \alpha2 \times a + \beta2 \times b + \gamma2 \times c \cdots (2)$$

$$DC = \alpha3 \times a + \beta3 \times b + \gamma3 \times c \cdots (3)$$

Here, $\alpha1$ is a coefficient for a detection signal level a set according to the incident angle of the light beam from the point light source PA on the subject surface 71 to be restored at the position Pa on the image sensor 11. $\beta1$ is a coefficient for a detection signal level b set according to the incident angle of the light beam from the point light source PB on the subject surface 71 to be restored at the position Pa on the image sensor 11. $\gamma1$ is a coefficient for a detection signal level c set according to the incident angle of the light beam from the point light source PC on the subject surface 71 to be restored at the position Pa on the image sensor 11.

Thus, $(\alpha1 \times a)$ of the detection signal level DA is a value indicating the detection signal level by the light beam from the point light source PA at the position Pc. $(\beta1 \times b)$ of the detection signal level DA is a value indicating the detection signal level by the light beam from the point light source PB at the position Pc. $(\gamma1 \times c)$ of the detection signal level DA is a value indicating the detection signal level by the light beam from the point light source PC at the position Pc.

Thus, the detection signal level DA is expressed as a composite value obtained by multiplying each component of the point light sources PA, PB, and PC at the position Pa by coefficients $\alpha1$, $\beta1$, and $\gamma1$, respectively. Hereinafter, the coefficients $\alpha1$, $\beta1$, and $\gamma1$ are collectively referred to as a coefficient set.

Similarly, a coefficient set $\alpha2$, $\beta2$, and $\gamma2$ for the detection signal level DB in the point light source PB corresponds to the coefficient set $\alpha1$, $\beta1$, and $\gamma1$ for the detection signal level DA in the point light source PA, respectively.

Further, a coefficient set $\alpha3$, $\beta3$, and $\gamma3$ for the detection signal level DC in the point light source PC corresponds to the coefficient set $\alpha1$, $\beta1$, and $\gamma1$ for the detection signal level DA in the point light source PA, respectively.

However, the detection signal levels of the pixels at the positions Pa, Pb, and Pc are values expressed by the sum of products of the light intensities a, b, and c of the light beams emitted from the point light sources PA, PB, and PC, respectively, and coefficients. Thus, the detection signal levels are obtained by mixing the light intensities a, b, and c of the light beams emitted from the point light sources PA, PB, and PC, respectively, and thus the detection signal levels are different from that of a picture of the subject being image-formed.

In other words, in the lensless camera, pixel values of the positions Pa, Pb, and Pc are obtained by constructing simultaneous equations using the coefficient set $\alpha1$, $\beta1$, and $\gamma1$; the coefficient set $\alpha2$, $\beta2$, and $\gamma2$; the coefficient set $\alpha3$, $\beta3$, and $\gamma3$; and the detection signal levels DA, DB, and DC, and solving for the light intensities a, b, and c. Thus, in the lensless camera, a restored image which is a set of the pixel values is reconstructed and restored.

In addition, in a case where a distance between the image sensor 11 and the subject surface 71 changes, the coefficient set $\alpha1$, $\beta1$, and $\gamma1$, the coefficient set $\alpha2$, $\beta2$, and $\gamma2$, and the coefficient set $\alpha3$, $\beta3$, and $\gamma3$ change. However, in such a case, by changing the coefficient sets, the lensless camera can reconstruct restored images of the subject surfaces at various distances.

As described above, by changing the coefficient sets to those corresponding to the various distances in one imaging, the lensless camera can reconstruct the images of the subject surfaces at various distances from the imaging position.

As a result, in imaging using the lensless camera, it is not necessary to worry about a phenomenon such as so-called out-of-focus, which occurs by imaging in a state where a focal point is deviated in imaging by the lens-using camera. In imaging using the lensless camera, when imaging is performed so that a subject to be imaged is included in the angle of view, by changing the coefficient set according to the distance, the images of the subject surfaces at various distances can be reconstructed after imaging.

Note that the detection signal level depicted in the upper right part of Fig. 2 is not a detection signal level corresponding to an image obtained by image-forming a picture of the subject, and thus the detection signal level is not the pixel value. In addition, the detection signal level depicted in the lower right part of Fig. 2 is a signal value for each pixel corresponding to the image obtained by image-forming a picture of the subject, that is, a value of each pixel of the restored image, and thus the detection signal level is the pixel value.

With this configuration, it is possible to realize a so-called lensless camera in which an imaging lens or a pinhole is not necessary. As a result, since an imaging lens and a pinhole are not essential components, it is possible to reduce the height of the imaging device, that is, to reduce the thickness in the incident direction of light in the configuration for realizing the imaging function. In addition, by various changing the coefficient set, it is possible to reconstruct and restore the restored images on the subject surfaces at various distances.

Note that hereinafter, an image before being reconstructed, which is imaged by an image sensor, is simply referred to as an observation image, and an image reconstructed and restored by performing signal processing on the observation image is referred to as a restored image or a final image. That is, by various changing the above-described coefficient set, images on the subject surfaces 71 at various distances can be reconstructed as the final images from one observation image.

Fig. 3 is diagrams depicting a configuration example of an imaging element in a lensless camera. An upper part is a top view of the mask 51, and a lower part is a perspective view of the mask 51 and the image sensor 11 as viewed from an upper side.

In an image element of a typical lensless camera, for example, as depicted in Fig. 3, the unit size of the opening portion 51a in the mask 51 is uniformly set for the entire region. In addition, in the image sensor 11, one image is imaged as a whole by the light transmitted through the mask 51.

Signal Processing for Generating Restored Image

Next, signal processing for generating the restored image from the observation image of the lensless camera will be explained. Fig. 4 is a diagram depicting a schematic configuration of a lensless camera 80.

As depicted in Fig. 4, the lensless camera 80 has a configuration in which a mask 82 is disposed in front of an image sensor 81. The mask 82 is, for example, a mask in which a light transmitting region and a light non-transmitting region are set as a two dimensional pattern. The light through the mask 82 is input to the image sensor 81.

Fig. 4 illustrates a configuration example in which a subject 85 is photographed and a restored image (final image) 87 obtained by restoring the subject image is output. Note that an image imaged by the image sensor (solid-state imaging element) 81 and before being reconstructed is the observation image 86, and an image reconstructed and restored by a signal processing unit 83 performing signal processing on the observation image 86 is the restored image 87. The restored image 87 is an image including the subject of the photographing scene, similarly to a normal lens-using camera.

The image sensor 81 photographs the observation image 86, which is a picture through the mask 82. The imaging data through the mask 82, that is, the observation image 86 on the image sensor 81 is input to the signal processing unit 83. The signal processing unit 83 generates the restored image 87 as a two dimensional image corresponding to a photographing scene similar to that of the typical camera by performing predetermined signal processing on the observation image 86 on the image sensor 81.

In the signal processing unit 83, in the signal processing for generating the restored image 87 obtained by reproducing an actual scene from the observation image 86 on the image sensor 81, it is necessary to perform processing in consideration of various photographing conditions.

Specifically, for example, it is necessary to execute the signal processing in consideration of the following photographing conditions.

(1) The geometric position of an image sensor with respect to a subject
(2) The intensity and spectral characteristics of light output from a subject
(3) Modulation by a mask
(4) The position and geometric relationships between a mask and an image sensor
(5) The spectral sensitivity characteristics of a sensor

In particular, the position and geometric relationships between the mask 82 and the image sensor 81 greatly affect the restored image 87 with respect to physical changes of the relationships, and it is difficult to handle the relationships as known values in the system.

In a case where the signal processing is performed on the assumption that the position and geometric relationships between the mask 82 and the image sensor 81 are different from the actual relationship, and the restored image 87 is generated, the restored image 87 may be broken. Thus, the signal processing unit 83 needs to perform processing in consideration of the position and geometric relationships between the mask 82 and the image sensor 81 unique to each lensless camera 80.

When a photographing principle of the observation image by the lensless camera 80 depicted in Fig. 4 is formulated, it can be expressed by the following Equation (4).

$$y = Fx + n \quad (4)$$

Where,

y: Observation signal of the image sensor 81 (one dimensional data)
x: Scene vector (value of radiated light of photographing scene (one dimensional data))
n: Noise
F: Imaging matrix

Note that x is a value of radiated light of a photographing scene, and also corresponds to a pixel value of the restored image 87. This is because the restored image 87 corresponds to an image obtained by reproducing the value of the radiated light of the photographing scene.

As can be understood from the above Equation (4), the observation signal y of the image sensor 81 of the lensless camera 80 is a signal obtained by adding the noise n to light obtained by modulating the scene vector x of the photographing scene by the imaging matrix F.

The above Equation (4) will be explained in detail with reference to Fig. 5 and the following drawings. Fig. 5 is a diagram explaining photographing processing and image restoration processing of the lensless camera 80. Fig. 5 illustrates the lensless camera 80, the signal processing unit 83, and the restored image 87 as in Fig. 4.

The lensless camera 80 includes the image sensor 81 and the mask 82. The image sensor 81 is, for example, a sensor having an $M \times N$ pixel configuration of N pixels in the horizontal direction and M pixels in the vertical direction as depicted in Fig. 5.

In the example depicted in Fig. 5, the lensless camera 80 photographs an image of a photographing region including a tree and a person. Finally, the restored image 87 including the tree and the person is generated by the image restoration processing of the signal processing unit 83. The resolution of the restored image 87 is a resolution of $K \times L$ pixels of L pixels in the horizontal direction and K pixels in the vertical direction.

The resolution of the restored image 87 depends on the signal processing in the signal processing unit 83. Specifically, the resolution of the restored image 87 depends on how much of the radiated light from the photographing subject is subdivided and analyzed. A photographing scene 90 depicted in Fig. 5 is a two dimensional plane set in a passage region of the radiated light from the subject.

This two dimensional plane is a two dimensional plane parallel to the image sensor 81, and light incident on the image sensor 81 from the subject passes through this two dimensional plane. The subject light passing through the two dimensional plane is reproduced to obtain the restored image 87.

A plurality of circles depicted in the photographing scene 90 on the two dimensional plane depicted in Fig. 5 are sampling points, and the radiated light of the sampling point corresponds to the scene vector x (values of the radiated light of the photographing scene) in the above Expression (4). By reproducing the scene vector x, the value of each pixel of the restored image is determined. That is, the signal processing unit 83 calculates the radiated light in units of sampling points on the photographing scene 90 on the two dimensional plane depicted in Fig. 5, and sets the pixel value of the restored image 87.

In the example depicted in Fig. 5, the number of sampling points on the photographing scene 90 on the two dimensional plane is $K \times L$ points of L points in the horizontal direction and K points in the vertical direction. The signal processing unit 83 receives an output of the image sensor 81 having the M x N pixels configuration of the lensless camera 80, that is, an input of an observation image obtained through the mask 82, and analyzes radiated light of K x L sampling points on the photographing scene 90. Then, the signal processing unit 83 generates the restored image 87 having the resolution of K x L pixels of L pixels in the horizontal direction and K pixels in the vertical direction.

Next, a specific calculation processing example of the above-described Equation (4) will be explained with reference to Fig. 6. Fig. 6 is a diagram explaining an example of a correspondence relationship between a photographed image of the lensless camera 80 and a restored image.

Fig. 6 indicates a calculation formula expressed in the form of data matrices constituting the above Expression (4). That is, the data matrices include four data of (a) image sensor observation value y 101, (b) an imaging matrix F 102, (c) scene vector x (sampling point radiated light (= restored image)) 103, and (d) noise n 104.

(a) The image sensor observation value y 101 is a matrix of MN rows and one column constituted by observation values (y(1), y(2),··· y(MN)) of the pixels of M x N image sensors.
(b) The imaging matrix F 102 is a matrix including correspondence relationship information between (a) the image sensor observation value y 101 and (c) the scene vector x 103, and is a matrix of MN rows and KL columns.

The multiplication result of (b) the imaging matrix F 102 and (c) the scene vector x 103 + (d) the noise n 104 is (a) the image sensor observation value y 101, that is, pixel values of MN pixels of the image sensor.

Note that, in a case where the pixel values of KL pixels of the restored image are calculated from (a) the image sensor observation value y 101, an inverse matrix of the imaging matrix F 102 is used.

(c) the scene vector x 103 is a matrix of KL rows and one column constituted by KL elements (x(1), x(2),···x(KL)) equal to the number of sampling points set in the photographing scene 90 of the two dimensional plane explained in Fig. 5, that is, the number of pixels of the restored image 87.

(d) the noise n 104 is noises corresponding to pixels of the M x N image sensors, and is a matrix of MN rows and one column constituted by the values (n(1), n(2),···n(MN)) of the noises of pixels.

As described above, the calculation of the above Equation (4) means that the calculation of the matrix depicted in Fig. 6 is performed.

In a case where the number of pixels of the image sensor 81 is MN pixels and the resolution of the restored image is KL pixels, the imaging matrix F is a two dimensional matrix having the number of dimensions of (MN) x (KL).

The scene vector x is multiplied by the imaging matrix F, and the noise vector n in M × N dimensions is added, thereby obtaining the observation vector y including one dimensional data of the values of pixels on the image sensor 81. Note that the elements of each row of the imaging matrix F represent light from each point in the scene that reaches a certain pixel of the image sensor 81 through the mask 82.

First Embodiment

Next, a detailed configuration of the lensless camera 80 according to a first embodiment will be explained with reference to Figs. 7 and 8. Fig. 7 is a cross-sectional view depicting an example of a configuration of the lensless camera 80 according to the first embodiment of the present disclosure, and Fig. 8 is a plan view depicting the example of the configuration of the lensless camera 80 according to the first embodiment of the present disclosure.

As depicted in Fig. 7, the lensless camera 80 according to the first embodiment includes the image sensor 81, the mask 82, a substrate 180, a housing 181, a window member 182, and a first light shielding member 183. The lensless camera 80 is an example of an imaging device, the image sensor 81 is an example of a solid-state imaging element, and the mask 82 is an example of an optical modulation element.

The image sensor 81 includes an effective area 81a in which a plurality of pixels (not illustrated) are located in a matrix. A photoelectric conversion element (for example, a photodiode) that generates a charge amount corresponding to an incident light amount and accumulates the charge amount therein is provided in the pixel located in the effective area 81a.

The mask 82 modulates light L incident on the lensless camera 80. The mask 82 has a two dimensional pattern including, for example, a transmissive region (opening portion 51a (see Fig. 1)) and a non-transmissive region (light shielding portion 51b (see Fig. 1)). In this case, the mask 82 modulates an amplitude of the incident light L.

The mask 82 is not limited to the case of modulating the amplitude of the light L. For example, the mask 82 may have a two dimensional pattern including a region in which a phase of the incident light L is modulated to a first state and a region in which the phase of the incident light L is modulated to a second state different from the first state. In this case, the mask 82 modulates the phase of the incident light L.

Further, the mask 82 is not limited to the case of modulating the amplitude or the phase of the light L, and may be of any type as long as the mask 82 provides some modulation to the light L.

The mask 82 is located on the light incident side of the effective area 81a in the image sensor 81. Then, the light L modulated by the mask 82 is incident on the effective area 81a of the image sensor 81. The mask 82 is located, for example, substantially parallel to the effective area 81a.

The substrate 180 has a plate shape, and the image sensor 81 and the housing 181 are mounted on a front surface 180a. The substrate 180 is, for example, a rigid substrate or a ceramic substrate.

The housing 181 is located on the front surface 180a of the substrate 180 so as to surround the periphery of the image sensor 81, and supports the window member 182 on an optical axis of the image sensor 81. The housing 181 has, for example, a rectangular frame shape, and is made of a resin material having a light shielding property, a metal material having the light shielding property, or the like.

The window member 182 is made of a material that is transparent at least in a wavelength region of the light L to be imaged by the lensless camera 80. The window member 182 is located on the light incident side of the effective area 81a in the image sensor 81.

The window member 182 has, for example, a plate shape and has a thickness of about 0.5 (mm). The window member 182 includes a first main surface 182a facing the effective area 81a, a second main surface 182b on the opposite side (that is, on the light incident side of the first main surface 182a) of the first main surface 182a, and a plurality of side surfaces 182c.

The window member 182 supports the mask 82 on the first main surface 182a. In other words, the mask 82 is formed on the first main surface 182a of the window member 182. In Fig. 8 and the following drawings each corresponding to Fig. 8, the substrate 180, the housing 181, and the window member 182 are not illustrated for ease of understanding.

Here, in the first embodiment, as depicted in Figs. 7 and 8, the first light shielding member 183 having the light shielding property is provided so as to surround the mask 82 on the first main surface 182a. That is, in the first embodiment, the first light shielding member 183 is located flush with the mask 82 so as to surround the periphery of the mask 82 in plan view.

Thus, the obliquely incident light L can be suppressed from reaching the image sensor 81. Thus, in the lensless camera 80, among the incident light reaching the image sensor 81, generation of light components unnecessary for generating the restored image due to reflection on the surface of the effective area 81a, re-reflection on the mask 82, or the like can be suppressed.

Thus, according to the first embodiment, since the noise component unnecessary for generating the restored image can be reduced, the image quality of the lensless camera 80 can be improved.

In the first embodiment, a size WM of an opening portion 183a provided in the first light shielding member 183 and in which the mask 82 is located is suitably equal to or less than a size Wp of the effective area 81a (that is, WM ≤ Wp). In the first embodiment, the size WM of the opening portion 183a is substantially equal to a size of the mask 82.

In the lens-using camera described above, it is necessary to satisfy WM > Wp so as not to block particularly an upper light beam among the light (the upper light beam, a main light beam, and a lower light beam) emitted through the imaging lens 32 (see Fig. 1). On the other hand, the lensless camera 80 according to the first embodiment can have a structure that does not include the imaging lens 32, and thus can satisfy the relationship of WM ≤ Wp.

In the first embodiment, with such a configuration, it is possible to cause the necessary light L to enter the effective area 81a of the image sensor 81 through the mask 82 while suppressing unnecessary light incidence. Thus, according to the first embodiment, the image quality of the lensless camera 80 can be further improved.

In the first embodiment, as depicted in Fig. 7, an outer peripheral portion of the first light shielding member 183 provided on the first main surface 182a of the window member 182 is suitably located so as to be in contact with the housing 181. That is, in the first embodiment, the lensless camera 80 is suitably configured such that the light L is not incident on the image sensor 81 from a portion of the first light shielding member 183 excluding the opening portion 183a.

Thus, since the noise component unnecessary for generating the restored image can be further reduced, the image quality of the lensless camera 80 can be further improved.

As a material for forming the first light shielding member 183, an inorganic material, a resin material, or the like can be suitably used. As the inorganic material, chromium oxide, a layered film of chromium oxide and metal chromium, a layered film of chromium oxide and chromium nitride, or the like can be used. As the resin material, a resin or the like can be used in which a light absorber such as carbon black is dispersed in a resin varnish such as an acrylic resin, an epoxy resin, an olefin resin, or the like.

As a method of forming the first light shielding member 183, in the case of the inorganic material, a film may be formed by a vapor deposition method or a plating method, and an unnecessary region may be etched and removed by a photolithography method. In the case of the resin material, a coating method, a printing method, or the like can be suitably used.

Alternatively, the first light shielding member 183 may be installed by a method of mechanically fastening, using adhesion or screws, an aluminum material having a black alumite surface formed by an injection molding method or a cutting method, or various engineering plastic materials such as a black polycarbonate material.

At this time, in a forming step of the mask 82, it is preferable that irreversible structural change, damage, contamination, or the like be not given to a formation region of the mask 82. For example, it is preferable to perform masking processing in advance, such as photoresist or an aluminum vapor deposition film that can be removed without affecting the structures of the first light shielding member 183 and the mask 82 which have been formed.

The photoresist can be removed with a resist stripping solution, and the aluminum vapor deposition film can be removed with dilute hydrochloric acid or the like, and it is preferable to perform masking with a material that can have a solubility difference from the material of the formed first light shielding member 183.

For example, chromium oxide or glass is insoluble in the resist stripping solution, and thus, a formation region of an optical modulation structure can be protected. In addition, in a case where the first light shielding member 183 is formed of the resin material, the formation region of the mask 82 is protected by the aluminum vapor deposition film before the first light shielding member 183 is formed, and the mask can be removed by performing dilute hydrochloric acid processing after the first light shielding member 183 is formed.

In the present disclosure, the window member 182 may have an absorptance of 10% or more in the wavelength region of the light L to be imaged. Thus, when an influence of a multiple reflection inside the window member 182 occurs in a wide range, such as when the thickness of the window member 182 is large with respect to a distance between the mask 82 and the effective area 81a, the influence of the multiple reflection can be reduced. Thus, according to the present disclosure, the image quality of the lensless camera 80 can be further improved.

For example, in the present disclosure, by coloring the window member 182, the window member 182 can have the absorptance of 10% or more in the wavelength region of the light L to be imaged.

For example, in the case of the lensless camera 80 used in the visible light band, the window member 182 having an absorption amount that does not excessively attenuate the amount of the light L from the subject in the wavelengths of 450 nm to 650 nm or 700 nm is exemplified.

In addition, in the case of the lensless camera 80 used in the near infrared region, the window member 182 having an absorption amount that does not excessively attenuate the amount of the light L from the subject in the wavelengths of 650 nm or 700 nm to 1000 nm is exemplified.

The absorption amount that does not excessively attenuate the amount of the light L from the subject can be increased or decreased depending on the signal processing method, but an amount of approximately 10% to 20% with respect to the amount of the light L from the subject is exemplified. In this case, an attenuation effect of 30% to 50% can be obtained in the three times of the multiple reflections.

As an example of such a window member 182, various color temperature conversion filter substrates can be used, but the window member 182 is not limited thereto, and may be selected from necessary wavelength characteristics and supplemented with various vapor deposition coatings.

In the present disclosure, the window member 182 may be combined with a function of reflecting and absorbing light of a specific wavelength in order to attenuate unnecessary light outside of a target region of multiple reflection suppression.

For example, in the case of the lensless camera 80 used in the visible light band, the window member 182 may be combined with an IR cut filter function in which the absorption amount of the wavelengths of 650 nm to 1200 nm is increased.

In addition, in the case of the lensless camera 80 used in the near infrared region, the window member 182 may be combined with an infrared bandpass filter function in which the visible light band having wavelengths of 450 nm to 650 nm or 700 nm and infrared rays having wavelengths longer than 1000 nm are cut.

In the present disclosure, the window member 182 may be formed by a vapor deposition film or the like on the opposite side of a surface on which the mask 82 is located in the window member 182 so as to absorb and reflect a specific wavelength, thereby reinforcing an absorption function in a wavelength region of the light L to be imaged.

Various Modifications of First Embodiment

Next, various modifications of the lensless camera 80 according to the first embodiment will be explained with reference to Figs. 9 to 15.

First Modification

Fig. 9 is a cross-sectional view depicting an example of a configuration of the lensless camera 80 according to a first modification of the first embodiment of the present disclosure, and Fig. 10 is a plan view depicting the example of the configuration of the lensless camera 80 according to the first modification of the first embodiment of the present disclosure.

As depicted in Figs. 9 and 10, the first modification is different from the above-described first embodiment in that a plurality of opening portions 183b are provided in the first light shielding member 183. The opening portion 183b is an example of another opening portion.

The opening portion 183b is provided, for example, to visually recognize a positioning mark 81b (see Fig. 11) formed on a front surface of the image sensor 81. Figs. 11 and 12 are cross-sectional views each depicting an example of a visual recognition state of the positioning mark 81b in the lensless camera 80 according to the first modification of the first embodiment of the present disclosure.

In an alignment step of the mask 82, when a positional relationship between the effective area 81a and the mask 82 in the horizontal direction is in a desired state, the positioning mark 81b can be visually recognized at the center of the opening portion 183b as depicted in Fig. 11 or 12.

On the other hand, in the alignment step of the mask 82, when the positional relationship between the effective area 81a and the mask 82 in the horizontal direction is not in the desired state, the positioning mark 81b cannot be visually recognized at the center of the opening portion 183b.

As described above, in the first modification, by providing the plurality of opening portions 183b in the first light shielding member 183, the positioning performance of the mask 82 can be improved.

In the first modification, as depicted in Fig. 10, four opening portions 183b are suitably provided at positions each adjacent to a respective one of four sides of the opening portion 183a having a rectangular shape in plan view. Thus, all the positions of the mask 82 with respect to the effective area 81a in the X direction, the Y direction, and the θ direction can be aligned. Thus, according to the first modification, the positioning performance of the mask 82 can be further improved.

The shape of the positioning mark 81b is not limited to a cross shape depicted in Fig. 11 and a circular shape depicted in Fig. 12, and may be any shape such as an L-shape. Also, the shape of the opening portion 183b is not limited to the circular shape depicted in Figs. 11 and 12, and may be any shape such as a square shape, an L-shape, or a cross shape.

In the first light shielding member 183 in the first modification, for example, in a forming step of the first light shielding member 183, the opening portion 183b is suitably formed by forming a region in which light is not shielded, in a part of a light shielding region by a masking method or the like.

In the first modification, after the alignment step of the mask 82, the plurality of opening portions 183b may be closed by applying a black resin to the plurality of opening portions 183b. This allows both the positioning performance of the mask 82 and the image quality of the lensless camera 80.

In the first modification, the positioning mark 81b need not be formed on the front surface of the image sensor 81 as long as the opening portion 183b is formed in the first light shielding member 183.

In this case, in the alignment step of the mask 82, by setting the image sensor 81 to an operating state, causing parallel light or the like to be incident from the opening portion 183b, and detecting the position of the incident light by the image sensor 81, the horizontal position and the vertical position of the mask 82 can be aligned.

In addition, in the present disclosure, even when the plurality of the opening portions 183b and the plurality of the positioning marks 81b are not provided, the mask 82 can be positioned with high accuracy by performing a positioning step which will be described below.

Specifically, first, a predetermined reference image is imaged by the lensless camera 80 in which the mask 82 is installed at a desired position, and the imaging data thereof is stored as reference image data in a storage section or the like.

Next, the reference image is imaged at each relative position while the relative position between the mask 82 and the effective area 81a is variously changed, and imaging data thereof are obtained as measurement image data.

Next, differences between the reference image data stored in the storage section or the like and the measurement image data at each relative position between the effective area 81a and the mask 82 are calculated by a known differential calculation method. Finally, a relative position at which the calculated difference is the smallest is set as the desired position of the mask 82.

Thus, even when the plurality of opening portions 183b and the plurality of positioning marks 81b are not provided, the mask 82 can be positioned with high accuracy.

Second Modification

Fig. 13 is an enlarged cross-sectional view depicting an example of a configuration of the lensless camera 80 according to a second modification of the first embodiment of the present disclosure. As depicted in Fig. 13, in the second modification, the first light shielding member 183 has a tapered shape at an end portion 183c on the opening portion 183a side.

In the tapered shape of the first light shielding member 183, for example, the end portion 183c is gradually located inward as the end portion 183c approaches the first main surface 182a.

Thus, the obliquely incident light L can be suppressed from being reflected at the end portion 183c and reaching the image sensor 81. Thus, in the lensless camera 80, among the incident light reaching the image sensor 81, generation of light components unnecessary for generating the restored image due to reflection on the surface of the effective area 81a (see Fig. 7), re-reflection on the mask 82, or the like can be suppressed.

Thus, according to the second modification, since the noise component unnecessary for generating the restored image can be further reduced, the image quality of the lensless camera 80 can be further improved. In the present disclosure, the tapered shape of the end portion 183c is not limited to a linear shape in a cross-sectional view, and may be a curved shape or the like.

The tapered shape is formed, for example, as follows. First, a chromium oxide film having a thickness of 2 ($\mu$m) is formed on the first main surface 182a of the window member 182 by reactive sputtering.

Next, a photoresist is formed by a known lithography method in a portion of the chromium oxide film where the first light shielding member 183 is to be formed. Finally, etching processing is performed on the chromium oxide film using a ceric ammonium nitrate solution.

Then, the end portion 183c on the opening portion 183a side is isotropically etched, so that the end portion 183c having the tapered shape is formed. In the etching processing on the chromium oxide film, the tapered shape can be controlled to a desired shape according to the amount of stirring of the solution or the intensity of circulation and spraying of the solution.

In addition, in the case where the first light shielding member 183 is formed by printing a carbon black dispersed resin film, the end portion 183c having the tapered shape can be formed by printing only on a predetermined region by a screen printing method and then performing steps of drying and curing.

In addition, when the first light shielding member 183 is formed of a thermoplastic resin, the end portion 183c having the tapered shape can be formed by heat processing. In addition, when the first light shielding member 183 is formed of a thermosetting resin, the end portion 183c having the tapered shape can be formed by adjusting a coating viscosity, a coating temperature, and a curing temperature.

Third Modification

Fig. 14 is a cross-sectional view depicting an example of a configuration of the lensless camera 80 according to a third modification of the first embodiment of the present disclosure. As depicted in Fig. 14, in the third modification, the size of the opening portion 183a provided in the first light shielding member 183 and the size of the mask 82 are different from those in the first embodiment described above.

Specifically, in the third modification, a size WM1 of the opening portion 183a provided in the first light shielding member 183 is larger than a size WMM of the mask 82 (that is, WMM < WM1). In the third modification, as in the first embodiment described above, the size WM1 of the opening portion 183a is equal to or less than the size Wp of the effective area 81a (that is, WM1 $\leq$ Wp).

In the third modification, since the mask 82 and the first light shielding member 183 are disposed in a relationship of WMM < WM1, a favorable restored image can be obtained while suppressing the incidence of the unnecessary light L.

In a case of WMM = WM1, a behavior of the light L at a boundary portion between the mask 82 and the first light shielding member 183 may become unstable, such as being affected by process conditions. Thus, in the case of WMM = WM1, in order to obtain a favorable restored image, it is necessary to form the mask 82 and the first light shielding member 183 with very high accuracy.

On the other hand, in the third modification, since WMM < WM1 is satisfied, the behavior of the light L at the boundary portion between the mask 82 and the first light shielding member 183 is less likely to become unstable even when the mask 82 and the first light shielding member 183 are not formed with very high accuracy.

In addition, in the third modification, in order to suppress the formation of the mask 82 from being unstable at the boundary portion, a pseudo mask (dummy mask) can be disposed on the outer side. In this case, a part of the dummy mask may be formed in contact with (or overlapping) the first light shielding member 183. Thus, a favorable restored image that is not affected by the instability of the boundary portion can be obtained.

Fourth Modification

Fig. 15 is a cross-sectional view depicting an example of a configuration of the lensless camera 80 according to a fourth modification of the first embodiment of the present disclosure. As depicted in Fig. 15, in the fourth modification, a positional relationship between the image sensor 81, the substrate 180, and the window member 182 is different from that in the first embodiment described above.

Specifically, the lensless camera 80 according to the fourth modification has a so-called flip chip structure in which the effective area 81a of the image sensor 81 faces the substrate 180 side.

In the fourth modification, the substrate 180 includes an opening portion 180c having a rectangular shape in plan view. The image sensor 81 is located on a back surface 180b of the substrate 180 such that the entire effective area 81a is exposed to the opening portion 180c.

The substrate 180 supports the window member 182 on the optical axis of the image sensor 81 on the front surface 180a. That is, the window member 182 is located on the light incident side of the effective area 81a in the image sensor 81 via the substrate 180.

The mask 82 is located on the light incident side of the effective area 81a in the first main surface 182a of the window member 182. Then, the light L modulated by the mask 82 is incident on the effective area 81a of the image sensor 81. The mask 82 is located, for example, substantially parallel to the effective area 81a.

Here, in the fourth modification, as in the first embodiment described above, the first light shielding member 183 having the light shielding property is provided so as to surround the mask 82 on the first main surface 182a of the window member 182.

Thus, the obliquely incident light L can be suppressed from reaching the image sensor 81. Thus, in the lensless camera 80, among the incident light reaching the image sensor 81, generation of light components unnecessary for generating the restored image due to reflection on the surface of the effective area 81a, re-reflection on the mask 82, or the like can be suppressed.

Thus, according to the fourth modification, since the noise component unnecessary for generating the restored image can be reduced, the image quality of the lensless camera 80 can be improved.

In addition, in the fourth modification, since the housing 181 (see Fig. 7) can be removed from the lensless camera 80, the overall height of the lensless camera 80 can be suppressed to be low.

Second Embodiment

Next, a detailed configuration of the lensless camera 80 according to a second embodiment will be explained with reference to Figs. 16 to 18. Fig. 16 is a cross-sectional view depicting an example of a configuration of the lensless camera 80 according to the second embodiment of the present disclosure, and Fig. 17 is a plan view depicting the example of the configuration of the lensless camera 80 according to the second embodiment of the present disclosure.

As depicted in Fig. 16, the lensless camera 80 according to the second embodiment includes the image sensor 81, the mask 82, the substrate 180, the housing 181, the window member 182, and a second light shielding member 184.

Among these, the image sensor 81, the mask 82, the substrate 180, the housing 181, and the window member 182 are the same as those in the first embodiment described above, and thus, detailed explanation thereof will be omitted.

In the second embodiment, as depicted in Figs. 16 and 17, the second light shielding member 184 having the light shielding property is provided on the second main surface 182b of the window member 182. The second light shielding member 184 includes an opening portion 184a at a portion overlapping the mask 82 in plan view.

Thus, the obliquely incident light L can be suppressed from reaching the image sensor 81. Thus, in the lensless camera 80, among the incident light reaching the image sensor 81, generation of light components unnecessary for generating the restored image due to reflection on the surface of the effective area 81a, re-reflection on the mask 82, or the like can be suppressed.

Thus, according to the second embodiment, since the noise component unnecessary for generating the restored image can be reduced, the image quality of the lensless camera 80 can be improved.

In the second embodiment, a size WM2 of the opening portion 184a provided in the second light shielding member 184 is suitably equal to or less than the size Wp of the effective area 81a (that is, WM2 ≤ Wp).

In the second embodiment, with a configuration, it is possible to cause the necessary light L to enter the effective area 81a of the image sensor 81 through the mask 82 while suppressing unnecessary light incidence. Thus, according to the second embodiment, the image quality of the lensless camera 80 can be further improved.

In the second embodiment, the size WM2 of the opening portion 184a is preferably larger than the size WMM of the mask 82 (that is, WMM < WM2). For example, as depicted in Fig. 18, when the maximum incident angle of light necessary for the lensless camera 80 is θ1, the size WM2 (see Fig. 16) of the opening portion 184a and the size WMM (see Fig. 16) of the mask 82 are suitably set so that the following Expression (5) is established.

$$G1 = (WM2 - WMM)/2 \geq tM \cdot \tan\theta1 + tS \cdot \tan(\sin^{-1}((n1/n0) \cdot \sin\theta1)) \quad \cdots(5)$$

Where,

G1: Distance between an outer peripheral end of the mask and an inner peripheral end of the second light shielding member in plan view
tM: Thickness of the window member
tS: Thickness of the first light shielding member
n1: Refractive index of the window member
n0: Refractive index of air

By setting in this manner, light incidence from an angle larger than the maximum incident angle θ1 can be suppressed, and thus a noise component unnecessary for generating the restored image can be further reduced. Thus, according to the second embodiment, the image quality of the lensless camera 80 can be further improved.

In the second embodiment, when the image sensor 81 is viewed perpendicularly in a direction in which the mask 82 is installed, there is a gap of a distance G1 in which optical modulation is not performed between the mask 82 and the second light shielding member 184.

Thus, in the second embodiment, image processing (for example, median processing, binarization processing, or the like) different from the restoration processing may be performed. Thus, a frame-shaped optical image in which the gap is projected on the effective area 81a is formed, and it becomes easy to obtain calibration information for estimating the position of the mask 82.

In the second embodiment, as depicted in Fig. 16, an outer peripheral portion of the second light shielding member 184 provided on the second main surface 182b of the window member 182 is suitably located so as to be in contact with the housing 181 in plan view.

Thus, the obliquely incident light L can be suppressed from reaching the image sensor 81 through a gap between the second light shielding member 184 and the housing 181. Thus, according to the second embodiment, since the noise component unnecessary for generating the restored image can be further reduced, the image quality of the lensless camera 80 can be further improved.

As a material for forming the second light shielding member 184, a material similar to the material for forming the first light shielding member 183 described above can be used. As a method of forming the second light shielding member 184, a method similar to the method of forming the first light shielding member 183 described above can be used.

Various Modifications of Second Embodiment

Next, various modifications of the lensless camera 80 according to the second embodiment will be explained with reference to Figs. 19 to 23.

First Modification

Fig. 19 is a cross-sectional view depicting an example of a configuration of the lensless camera 80 according to a second modification of the first embodiment of the present disclosure, and Fig. 20 is a plan view depicting the example of the configuration of the lensless camera 80 according to the second modification of the first embodiment of the present disclosure.

As depicted in Figs. 19 and 20, the first modification is different from the above-described second embodiment in that a plurality of opening portions 184b are provided in the second light shielding member 184. The opening portion 184b is an example of another opening portion.

The opening portion 184b is provided, for example, to visually recognize a positioning mark 81b (see Fig. 11) formed on a front surface of the image sensor 81.

In the alignment step of the mask 82, when the positional relationship between the effective area 81a and the mask 82 in the horizontal direction is in the desired state, the positioning mark 81b can be visually recognized at the center of the opening portion 184b.

On the other hand, in the alignment step of the mask 82, when the positional relationship between the effective area 81a and the mask 82 in the horizontal direction is not in the desired state, the positioning mark 81b cannot be visually recognized at the center of the opening portion 184b.

As described above, in the first modification, by providing the plurality of opening portions 184b in the second light shielding member 184, the positioning performance of the mask 82 can be improved.

In the first modification, as depicted in Fig. 20, four opening portions 184b are suitably provided at positions each adjacent to a respective one of four sides of the opening portion 184a having a rectangular shape. Thus, all the positions of the mask 82 with respect to the effective area 81a in the X direction, the Y direction, and the θ direction can be aligned. Thus, according to the first modification, the positioning performance of the mask 82 can be further improved.

In the second light shielding member 184 in the first modification, for example, in a forming step of the second light shielding member 184, the opening portion 184b is suitably formed by forming a region in which light is not shielded, in a part of a light shielding region by a masking method or the like.

In the first modification, after the alignment step of the mask 82, the plurality of opening portions 184b may be closed by applying a black resin to the plurality of opening portions 184b. This allows both the positioning performance of the mask 82 and the image quality of the lensless camera 80.

In the first modification, the positioning mark 81b need not be formed on the front surface of the image sensor 81 as long as the opening portion 184b is formed in the second light shielding member 184.

In this case, in the alignment step of the mask 82, by setting the image sensor 81 to an operating state, causing parallel light or the like to be incident from the opening portion 184b, and detecting the position of the incident light by the image sensor 81, the horizontal position and the vertical position of the mask 82 can be aligned.

Second Modification

Fig. 21 is an enlarged cross-sectional view depicting an example of a configuration of the lensless camera 80 according to a second modification of the second embodiment of the present disclosure. As depicted in Fig. 21, in the second modification, the second light shielding member 184 has a tapered shape at an end portion 184c on the opening portion 184a side.

In the tapered shape of the second light shielding member 184, for example, the end portion 184c is gradually located inward as the end portion 184c approaches the second main surface 182b.

Thus, the obliquely incident light L can be suppressed from being reflected at the end portion 184c and reaching the image sensor 81. Thus, in the lensless camera 80, among the incident light reaching the image sensor 81, generation of light components unnecessary for generating the restored image due to reflection on the surface of the effective area 81a (see Fig. 16), re-reflection on the mask 82, or the like can be suppressed.

Thus, according to the second modification, since the noise component unnecessary for generating the restored image can be further reduced, the image quality of the lensless camera 80 can be further improved. In the present disclosure, the tapered shape of the end portion 184c is not limited to a linear shape in a cross-sectional view, and may be a curved shape or the like.

The tapered shape of the end portion 184c can be formed by the same method as the tapered shape of the end portion 183c (see Fig. 13) of the first light shielding member 183 (see Fig. 13) described above.

Third Modification

Fig. 22 is a cross-sectional view depicting an example of a configuration of the lensless camera 80 according to a third modification of the second embodiment of the present disclosure. As depicted in Fig. 22, the third modification is different from the above-described second embodiment in that a plurality of third light shielding members 185 are provided.

Specifically, in the third modification, the plurality of third light shielding members 185 are provided so as to cover the plurality of side surfaces 182c, respectively, of the window member 182.

Thus, the obliquely incident light L can be suppressed from entering from the side surface 182c of the window member 182 and reaching the image sensor 81. Thus, according to the third modification, since the noise component unnecessary for generating the restored image can be further reduced, the image quality of the lensless camera 80 can be further improved.

As a material for forming the third light shielding member 185, for example, a resin can be used in which a light absorber such as carbon black is dispersed in a base material; for example, a thermosetting resin such as an epoxy resin or an ultraviolet curable acrylic resin.

As a method of forming the third light shielding member 185, for example, a method of applying the above-described resin to the side surface 182c of the window member 182 by a dispensing method or the like, and drying and curing the resin can be used. Alternatively, the third light shielding member 185 may be formed by a method similar to the method of forming the first light shielding member 183 or the second light shielding member 184 described above.

Fourth Modification

Fig. 23 is a cross-sectional view depicting an example of a configuration of the lensless camera 80 according to a fourth modification of the second embodiment of the present disclosure. As depicted in Fig. 23, in the fourth modification, a positional relationship between the image sensor 81, the substrate 180, and the window member 182 is different from that in the second embodiment described above.

Specifically, the lensless camera 80 according to the fourth modification has a so-called flip chip structure in which the effective area 81a of the image sensor 81 faces the substrate 180 side.

In the fourth modification, the substrate 180 includes an opening portion 180c having a rectangular shape in plan view. The image sensor 81 is located on a back surface 180b of the substrate 180 such that the entire effective area 81a is exposed to the opening portion 180c.

The substrate 180 supports the window member 182 on the optical axis of the image sensor 81 on the front surface 180a. That is, the window member 182 is located on the light incident side of the effective area 81a in the image sensor 81 via the substrate 180.

The mask 82 is located on the light incident side of the effective area 81a in the first main surface 182a of the window member 182. Then, the light L modulated by the mask 82 is incident on the effective area 81a of the image sensor 81. The mask 82 is located, for example, substantially parallel to the effective area 81a.

Here, in the fourth modification, as in the second embodiment described above, the second light shielding member 184 having the light shielding property is provided on the second main surface 182b of the window member 182. The second light shielding member 184 includes the opening portion 184a at the portion overlapping the mask 82 in plan view.

Thus, the obliquely incident light L can be suppressed from reaching the image sensor 81. Thus, in the lensless camera 80, among the incident light reaching the image sensor 81, generation of light components unnecessary for generating the restored image due to reflection on the surface of the effective area 81a, re-reflection on the mask 82, or the like can be suppressed.

Thus, according to the fourth modification, since the noise component unnecessary for generating the restored image can be reduced, the image quality of the lensless camera 80 can be improved.

In addition, in the fourth modification, since the housing 181 (see Fig. 16) can be removed from the lensless camera 80, the overall height of the lensless camera 80 can be suppressed to be low.

Third Embodiment

Next, a detailed configuration of the lensless camera 80 according to a third embodiment will be explained with reference to Figs. 24 and 25. Fig. 24 is a cross-sectional view depicting an example of a configuration of the lensless camera 80 according to the third embodiment of the present disclosure, and Fig. 25 is an enlarged cross-sectional view depicting the example of the configuration of the lensless camera 80 according to the third embodiment of the present disclosure.

As depicted in Fig. 24, the lensless camera 80 according to the third embodiment includes the image sensor 81, the mask 82, the substrate 180, the housing 181, the window member 182, the first light shielding member 183, and the second light shielding member 184.

Among these, the image sensor 81, the mask 82, the substrate 180, the housing 181, and the window member 182 are the same as those in the first embodiment described above, and thus, detailed explanation thereof will be omitted.

In the third embodiment, the first light shielding member 183 having the light shielding property is provided so as to surround the mask 82 on the first main surface 182a of the window member 182, and the second light shielding member 184 having the light shielding property is provided on the second main surface 182b of the window member 182. The second light shielding member 184 includes the opening portion 184a at the portion overlapping the mask 82 in plan view.

Thus, the obliquely incident light L can be suppressed from reaching the image sensor 81. Thus, in the lensless camera 80, among the incident light reaching the image sensor 81, generation of light components unnecessary for generating the restored image due to reflection on the surface of the effective area 81a, re-reflection on the mask 82, or the like can be suppressed.

Thus, according to the third embodiment, since the noise component unnecessary for generating the restored image can be reduced, the image quality of the lensless camera 80 can be improved.

In the third embodiment, the size WM2 of the opening portion 184a provided in the second light shielding member 184 is suitably equal to or less than the size Wp of the effective area 81a (that is, WM2 ≤ Wp).

Furthermore, in the third embodiment, the size WM1 of the opening portion 183a provided in the first light shielding member 183 is suitably equal to or less than the size WM2 of the opening portion 184a provided in the second light shielding member 184 (that is, WM1 ≤ WM2).

In the third embodiment, with a configuration, it is possible to cause the necessary light L to enter the effective area 81a of the image sensor 81 through the mask 82 while suppressing unnecessary light incidence. Thus, according to the third embodiment, the image quality of the lensless camera 80 can be further improved.

In the third embodiment, the size WM1 of the opening portion 183a is preferably larger than the size WMM of the mask 82 (that is, WMM < WM1).

In a case of WMM = WM1, a behavior of the light L at a boundary portion between the mask 82 and the first light shielding member 183 may become unstable, such as being affected by process conditions. Thus, in the case of WMM = WM1, in order to obtain a favorable restored image, it is necessary to form the mask 82 and the first light shielding member 183 with very high accuracy.

On the other hand, in the third embodiment, since WMM < WM1 is satisfied, the behavior of the light L at the boundary portion between the mask 82 and the first light shielding member 183 is less likely to become unstable even when the mask 82 and the first light shielding member 183 are not formed with very high accuracy.

In the third embodiment, as depicted in Fig. 25, when the maximum incident angle of light necessary for the lensless camera 80 is $\theta 2$, the size WM1 of the opening portion 183a and the size WM2 of the opening portion 184a are suitably set so that the following Expression (6) is established.

$$G2 = (WM2 - WM1)/2 \geq tM \cdot \tan\theta 2 + tS \cdot \tan(\sin^{-1}((n1/n0) \cdot \sin\theta 2)) \quad \cdots (6)$$

Where,

G2: Distance between an inner peripheral end of the first light shielding member and an inner peripheral end of the second light shielding member in plan view

tS: Thickness of the first light shielding member and the second light shielding member

By setting in this manner, light incidence from an angle larger than the maximum incident angle $\theta 2$ can be suppressed, and thus a noise component unnecessary for generating the restored image can be further reduced. Thus, according to the third embodiment, the image quality of the lensless camera 80 can be further improved.

In the third embodiment, when the image sensor 81 is viewed perpendicularly in a direction in which the mask 82 is installed, there is a gap in which optical modulation is not performed between the mask 82 and the first light shielding member 183.

Thus, in the third embodiment, image processing (for example, median processing, binarization processing, or the like) different from the restoration processing may be performed. Thus, a frame-shaped optical image in which the gap is projected on the effective area 81a is formed, and it becomes easy to obtain calibration information for estimating the position of the mask 82.

In the third embodiment, in order to suppress the formation of the mask 82 from being unstable at the boundary portion between the mask 82 and the first light shielding member 183, a pseudo mask (dummy mask) can be disposed on the outer side. In this case, a part of the dummy mask may be formed in contact with (or overlapping) the first light shielding member 183. Thus, a favorable restored image that is not affected by the instability of the boundary portion can be obtained.

In the third embodiment, a light diffusion structure may be formed at at least one of an interface of the first light shielding member 183 with the window member 182 and an interface of the second light shielding member 184 with the window member 182. The light diffusion structure is, for example, an uneven structure having an arithmetic average roughness larger than the wavelength of the incident light.

Thus, the light L entering a portion of the window member 182 sandwiched between the first light shielding member 183 and the second light shielding member 184 can be suppressed from being repeatedly reflected between the first light shielding member 183 and the second light shielding member 184 and finally reaching the image sensor 81.

Thus, according to the third embodiment, since the noise component unnecessary for generating the restored image can be further reduced, the image quality of the lensless camera 80 can be further improved.

As a method of forming the light diffusion structure, for example, a method such as sandblasting, etching, nanoimprinting, or the like can be used. Alternatively, by printing a resin material having a refractive index substantially equal to that of the window member 182 by an inkjet printing method or the like, the light diffusion structure may be formed.

When a filler having a refractive index different from that of the resin material is dispersed in the resin material, the diffusion effect is enhanced, which is preferable. Alternatively, the same method as the method of forming the dummy mask described above may be used. In any of the methods, the average arithmetic roughness of the light diffusion structure is preferably larger than the wavelength of the incident light to be imaged so as to obtain a sufficient light diffusion effect.

Various Modifications of Third Embodiment

Next, various modifications of the lensless camera 80 according to the third embodiment will be explained with reference to Figs. 26 to 30.

First Modification

Fig. 26 is a cross-sectional view depicting an example of a configuration of the lensless camera 80 according to a first modification of the third embodiment of the present disclosure, and Fig. 27 is an enlarged cross-sectional view depicting the example of the configuration of the lensless camera 80 according to the first modification of the third embodiment of the present disclosure.

As depicted in Figs. 26 and 27, in the first modification, the size WM1 of the opening portion 183a of the first light shielding member 183 and the size WM2 of the opening portion 184a of the second light shielding member 184 are different from those in the third embodiment described above.

Specifically, in the first modification, the size WM2 of the opening portion 184a provided in the second light shielding member 184 is equal to or less than the size WM1 of the opening portion 183a provided in the first light shielding member 183 (that is, WM2 ≤ WM1).

In addition, in the first modification, the size WM1 of the opening portion 183a provided in the first light shielding member 183 is equal to or less than the size Wp of the effective area 81a (that is, WM1 ≤ Wp).

Further, in the first modification, the size WM2 of the opening portion 184a is larger than the size WMM of the mask 82 (that is, WMM < WM2).

Thus, the obliquely incident light L can be suppressed from reaching the image sensor 81. Thus, in the lensless camera 80, among the incident light reaching the image sensor 81, generation of light components unnecessary for generating the restored image due to reflection on the surface of the effective area 81a, re-reflection on the mask 82, or the like can be suppressed.

Thus, according to the first modification, since the noise component unnecessary for generating the restored image can be reduced, the image quality of the lensless camera 80 can be improved.

The configuration of the first modification is particularly effective when an influence of a multiple reflection inside the window member 182 occurs in a wide range, such as when the thickness of the window member 182 is large with respect to the distance between the mask 82 and the effective area 81a.

In the first modification, as depicted in Fig. 27, when the maximum incident angle of light necessary for the lensless camera 80 is θ3, the size WM1 of the opening portion 183a and the size WM2 of the opening portion 184a are suitably set so that the following Expression (7) is established.

$$G3 = (WM1 - WM2)/2 \geq tM \cdot \tan\theta3 + tS \cdot \tan(\sin^{-1}((n1/n0) \cdot \sin\theta3)) \quad \cdots(7)$$

Where,
G3: Distance between an inner peripheral end of the first light shielding member and inner peripheral end of the second light shielding member in plan view

By setting in this manner, light incidence from an angle larger than the maximum incident angle θ3 can be suppressed, and thus a noise component unnecessary for generating the restored image can be further reduced. Thus, according to the first modification, the image quality of the lensless camera 80 can be further improved.

In the first modification, when the image sensor 81 is viewed perpendicularly in a direction in which the mask 82 is installed, there is a gap in which optical modulation is not performed between the mask 82 and the second light shielding member 184.

Thus, in the first modification, image processing (for example, median processing, binarization processing, or the like) different from the restoration processing may be performed. Thus, a frame-shaped optical image in which the gap is projected on the effective area 81a is formed, and it becomes easy to obtain calibration information for estimating the position of the mask 82.

Second Modification

Fig. 28 is a cross-sectional view depicting an example of a configuration of the lensless camera 80 according to a second modification of the third embodiment of the present disclosure. As depicted in Fig. 28, the second modification is different from the first modification of the above-described third embodiment in that a mask 82A is disposed at the periphery of the mask 82.

The mask 82A is an example of another optical modulation element and has a repetitive symmetry with the mask 82. That is, the same two dimensional pattern as the two dimensional pattern formed in one (for example, the right side) region of the mask 82 is formed in the mask 82A adjacent to the other (for example, the left side) of the mask 82.

Thus, even when the size of the entire optical modulation element including the mask 82 and the mask 82A is equal to the size Wp (see Fig. 26) of the effective area 81a, the restored image can be generated from the observation image without any problem.

In the second modification, since the size of the entire optical modulation element including the mask 82 and the mask 82A can be increased, more light L can be incident on the effective area 81a. Thus, according to the second modification, the image quality of the lensless camera 80 can be further improved.

In addition, in the second modification, the mask 82A has the repetitive symmetry with the mask 82, and thus the amount of calculation in generation processing of the restored image can be reduced. Thus, according to the second modification, the generation processing of the restored image can be performed in a short time.

Third Modification

Fig. 29 is a cross-sectional view depicting an example of a configuration of the lensless camera 80 according to a third modification of the third embodiment of the present disclosure. As depicted in Fig. 29, the third modification is different from the above-described third embodiment in that a plurality of third light shielding members 185 are provided.

Specifically, in the third modification, the plurality of third light shielding members 185 are provided so as to cover the plurality of side surfaces 182c, respectively, of the window member 182.

Thus, the obliquely incident light L can be suppressed from entering from the side surface 182c of the window member 182 and reaching the image sensor 81. Thus, according to the third modification, since the noise component unnecessary for generating the restored image can be further reduced, the image quality of the lensless camera 80 can be further improved.

In the third modification, a light diffusion structure may be formed at an interface between the third light shielding member 185 and the window member 182. The light diffusion structure is, for example, an uneven structure having an arithmetic average roughness larger than the wavelength of the incident light.

Thus, the light L entering a portion of the window member 182 sandwiched between the first light shielding member 183 and the second light shielding member 184 can be suppressed from being reflected by the third light shielding member 185 and finally reaching the image sensor 81.

Thus, according to the third modification, since the noise component unnecessary for generating the restored image can be further reduced, the image quality of the lensless camera 80 can be further improved.

Fourth Modification

Fig. 30 is a cross-sectional view depicting an example of a configuration of the lensless camera 80 according to a fourth modification of the third embodiment of the present disclosure. As depicted in Fig. 30, in the fourth modification, a positional relationship between the image sensor 81, the substrate 180, and the window member 182 is different from that in the third embodiment described above.

Specifically, the lensless camera 80 according to the fourth modification has a so-called flip chip structure in which the effective area 81a of the image sensor 81 faces the substrate 180 side.

In the fourth modification, the substrate 180 includes an opening portion 180c having a rectangular shape in plan view. The image sensor 81 is located on a back surface 180b of the substrate 180 such that the entire effective area 81a is exposed to the opening portion 180c.

The substrate 180 supports the window member 182 on the optical axis of the image sensor 81 on the front surface 180a. That is, the window member 182 is located on the light incident side of the effective area 81a in the image sensor 81 via the substrate 180.

The mask 82 is located on the light incident side of the effective area 81a in the first main surface 182a of the window member 182. Then, the light L modulated by the mask 82 is incident on the effective area 81a of the image sensor 81. The mask 82 is located, for example, substantially parallel to the effective area 81a.

Here, in the fourth modification, as in the third embodiment described above, the first light shielding member 183 having the light shielding property is provided so as to surround the mask 82 on the first main surface 182a of the window member 182.

Further, in the fourth modification, as in the third embodiment described above, the second light shielding member 184 having the light shielding property is provided on the second main surface 182b of the window member 182.

The second light shielding member 184 includes the opening portion 184a at the portion overlapping the mask 82 in plan view.

Thus, the obliquely incident light L can be suppressed from reaching the image sensor 81. Thus, in the lensless camera 80, among the incident light reaching the image sensor 81, generation of light components unnecessary for generating the restored image due to reflection on the surface of the effective area 81a, re-reflection on the mask 82, or the like can be suppressed.

Thus, according to the fourth modification, since the noise component unnecessary for generating the restored image can be reduced, the image quality of the lensless camera 80 can be improved.

In addition, in the fourth modification, since the housing 181 (see Fig. 24) can be removed from the lensless camera 80, the overall height of the lensless camera 80 can be suppressed to be low.

Fourth Embodiment

Next, a detailed configuration of the lensless camera 80 according to a fourth embodiment will be explained with reference to Fig. 31. Fig. 31 is a cross-sectional view depicting an example of a configuration of the lensless camera 80 according to a fourth embodiment of the present disclosure.

As depicted in Fig. 31, the lensless camera 80 according to the fourth embodiment includes the image sensor 81, the mask 82, the substrate 180, the window member 182, and the first light shielding member 183.

The image sensor 81 includes an effective area 81a in which a plurality of pixels (not illustrated) are located in a matrix. A photoelectric conversion element (for example, a photodiode) that generates a charge amount corresponding to an incident light amount and accumulates the charge amount therein is provided in the pixel located in the effective area 81a.

The substrate 180 has a plate shape, and the image sensor 81 is mounted on the front surface 180a. The substrate 180 is, for example, a rigid substrate or a ceramic substrate.

The window member 182 is made of a material that is transparent at least in a wavelength region of the light L to be imaged by the lensless camera 80. The window member 182 is located on the image sensor 81 so as to be in contact with the effective area 81a of the image sensor 81.

The window member 182 has, for example, a plate shape and has a thickness of about 0.5 (mm). The window member 182 includes a first main surface 182a facing the effective area 81a, a second main surface 182b on the opposite side (that is, on the light incident side of the first main surface 182a) of the first main surface 182a, and a plurality of side surfaces 182c.

The mask 82 modulates light L incident on the lensless camera 80. The mask 82 is located on the light incident side of the effective area 81a in the image sensor 81. The mask 82 is located on the second main surface 182b of the window member 182.

Then, the light L modulated by the mask 82 is incident on the effective area 81a of the image sensor 81. The mask 82 is located, for example, substantially parallel to the effective area 81a.

Here, in the fourth embodiment, as depicted in Fig. 31, the first light shielding member 183 having the light shielding property is provided so as to surround the mask 82 on the second main surface 182b of the window member 182. That is, in the fourth embodiment, the first light shielding member 183 is located flush with the mask 82 so as to surround the periphery of the mask 82 in plan view.

Thus, the obliquely incident light L can be suppressed from reaching the image sensor 81. Thus, in the lensless camera 80, among the incident light reaching the image sensor 81, generation of light components unnecessary for generating the restored image due to reflection on the surface of the effective area 81a, re-reflection on the mask 82, or the like can be suppressed.

Thus, according to the fourth embodiment, since the noise component unnecessary for generating the restored image can be reduced, the image quality of the lensless camera 80 can be improved.

In addition, in the fourth embodiment, since the housing 181 (see Fig. 7) can be removed from the lensless camera 80, the overall height of the lensless camera 80 can be suppressed to be low.

In the fourth embodiment, a size WM of an opening portion 183a provided in the first light shielding member 183 and in which the mask 82 is located is suitably equal to or less than a size Wp of the effective area 81a (that is, $WM \leq Wp$). In the fourth embodiment, the size WM of the opening portion 183a is substantially equal to a size of the mask 82.

In the lens-using camera described above, it is necessary to satisfy $WM > Wp$ so as not to block particularly an upper light beam among the light (the upper light beam, a main light beam, and a lower light beam) emitted through the imaging lens 32 (see Fig. 1). On the other hand, the lensless camera 80 according to the fourth embodiment can have a structure that does not include the imaging lens 32, and thus can satisfy the relationship of $WM \leq Wp$.

In the fourth embodiment, with a configuration, it is possible to cause the necessary light L to enter the effective area 81a of the image sensor 81 through the mask 82 while suppressing unnecessary light incidence. Thus, according to the fourth embodiment, the image quality of the lensless camera 80 can be further improved.

Various Modifications of Fourth Embodiment

Next, various modifications of the lensless camera 80 according to the fourth embodiment will be explained with reference to Figs. 32 to 33.

First Modification

Fig. 32 is a cross-sectional view depicting an example of a configuration of the lensless camera 80 according to a first modification of the fourth embodiment of the present disclosure. As depicted in Fig. 32, in the first modification, the size of the opening portion 183a provided in the first light shielding member 183 and the size of the mask 82 are different from those in the fourth embodiment described above.

Specifically, in the first modification, a size WM1 of the opening portion 183a provided in the first light shielding member 183 is larger than a size WMM of the mask 82 (that is, WMM < WM1). In the first modification, as in the fourth embodiment described above, the size WM1 of the opening portion 183a is equal to or less than the size Wp of the effective area 81a (that is, WM1 $\leq$ Wp).

In the first modification, since the mask 82 and the first light shielding member 183 are disposed in a relationship of WMM < WM1, a favorable restored image can be obtained while suppressing the incidence of the unnecessary light L.

In a case of WMM = WM1, a behavior of the light L at a boundary portion between the mask 82 and the first light shielding member 183 may become unstable, such as being affected by process conditions. Thus, in the case of WMM = WM1, in order to obtain a favorable restored image, it is necessary to form the mask 82 and the first light shielding member 183 with very high accuracy.

On the other hand, in the first modification, since WMM < WM1 is satisfied, the behavior of the light L at the boundary portion between the mask 82 and the first light shielding member 183 is less likely to become unstable even when the mask 82 and the first light shielding member 183 are not formed with very high accuracy.

In addition, in the first modification, in order to suppress the formation of the mask 82 from being unstable at the boundary portion, a pseudo mask (dummy mask) can be disposed on the outer side. In this case, a part of the dummy mask may be formed in contact with (or overlapping) the first light shielding member 183. Thus, a favorable restored image that is not affected by the instability of the boundary portion can be obtained.

Second Modification

Fig. 33 is a cross-sectional view depicting an example of a configuration of the lensless camera 80 according to a second modification of the fourth embodiment of the present disclosure. As depicted in Fig. 33, the second modification is different from the above-described fourth embodiment in that a plurality of third light shielding members 185 are provided.

Specifically, in the second modification, the plurality of third light shielding members 185 are provided so as to cover the plurality of side surfaces 182c, respectively, of the window member 182.

Thus, the obliquely incident light L can be suppressed from entering from the side surface 182c of the window member 182 and reaching the image sensor 81. Thus, according to the second modification, since the noise component unnecessary for generating the restored image can be further reduced, the image quality of the lensless camera 80 can be further improved.

Effects

The imaging device (lensless camera 80) according to the embodiment includes the solid-state imaging element (image sensor 81), the optical modulation element (mask 82), and the first light shielding member 183. The solid-state imaging element (image sensor 81) includes the effective area 81a in which the plurality of pixels are located in a matrix. The optical modulation element (mask 82) is located on a light incident side of the effective area 81a and modulates the incident light L. The first light shielding member 183 is located flush with the optical modulation element (mask 82) so as to surround the periphery of the optical modulation element (mask 82) in plan view.

Thus, the image quality of the lensless camera 80 can be improved.

In the imaging device (lensless camera 80) according to the embodiment, the size WM (WM1) of the opening portion 183a provided in the first light shielding member 183 and in which the optical modulation element (mask 82) is located is equal to or less than the size Wp of the effective area 81a.

Thus, the image quality of the lensless camera 80 can be further improved.

In the imaging device (lensless camera 80) according to the embodiment, the size WM1 (WM) of the opening portion 183a provided in the first light shielding member 183 and in which the optical modulation element (mask 82) is located is larger than the size WMM of the optical modulation element (mask 82).

Thus, the behavior of the light L at the boundary portion between the mask 82 and the first light shielding member 183 is less likely to become unstable.

The imaging device (lensless camera 80) according to the embodiment further includes the window member 182 and the second light shielding member 184. The window member 182 is located on the light incident side of the effective area 81a, and includes the first main surface 182a facing the effective area 81a and the second main surface 182b on the opposite side of the first main surface 182a, and the optical modulation element (mask 82) and the first light shielding member 183 are located on the first main surface 182a. The second light shielding member 184 is located on the second main surface 182b of the window member 182, and includes the opening portion 183b on the light incident side of the optical modulation element (mask 82).

Thus, the image quality of the lensless camera 80 can be improved.

In the imaging device (lensless camera 80) according to the embodiment, the size WM2 of the opening portion 184a of the second light shielding member 184 is equal to or greater than the size WM1 of the opening portion 183a of the first light shielding member 183 and is equal to or less than the size Wp of the effective area 81a.

Thus, the image quality of the lensless camera 80 can be further improved.

In the imaging device (lensless camera 80) according to the embodiment, the size WM1 of the opening portion 183a of the first light shielding member 183 is equal to or greater than the size WM2 of the opening portion 184a of the second light shielding member 184 and equal to or less than the size Wp of the effective area 81a.

Thus, the image quality of the lensless camera 80 can be further improved.

The imaging device (lensless camera 80) according to the embodiment further includes another optical modulation element (mask 82A) located at the periphery of the optical modulation element (mask 82) and having the same two dimensional pattern as a part of a region of the optical modulation element (mask 82).

Thus, the image quality of the lensless camera 80 can be further improved and the generation processing of the restored image can be performed in a short time.

In the imaging device (lensless camera 80) according to the embodiment, the second light shielding member 184 has a tapered shape at the end portion 184c on the opening portion 184a side.

Thus, the image quality of the lensless camera 80 can be further improved.

In addition, the imaging device (lensless camera 80) according to the embodiment further includes the plurality of third light shielding members 185 located on the plurality of side surfaces 182c, respectively, of the window member 182.

Thus, the image quality of the lensless camera 80 can be further improved.

In the imaging device (lensless camera 80) according to the embodiment, the first light shielding member 183 has a tapered shape at the end portion 183c on the opening portion 183a side.

Thus, the image quality of the lensless camera 80 can be further improved.

In the imaging device (lensless camera 80) according to the embodiment, the first light shielding member 183 includes another opening portion (opening portion 183b) for aligning the optical modulation element (mask 82) with respect to the solid-state imaging element (image sensor 81).

Thus, the positioning performance of the mask 82 can be further improved.

The imaging device (lensless camera 80) according to the embodiment includes the solid-state imaging element (image sensor 81), the window member 182, the optical modulation element (mask 82), and the second light shielding member 184. The solid-state imaging element (image sensor 81) includes the effective area 81a in which the plurality of pixels are located in a matrix. The window member 182 is located on the light incident side of the effective area 81a, and includes the first main surface 182a facing the effective area 81a and the second main surface 182b on the opposite side of the first main surface 182a. The optical modulation element (mask 82) is located on the first main surface 182a of the window member 182 and modulates the incident light L. The second light shielding member 184 is located on the second main surface 182b of the window member 182, and includes the opening portion 184a on the light incident side of the optical modulation element (mask 82).

Thus, the image quality of the lensless camera 80 can be improved.

In the imaging device (lensless camera 80) according to the embodiment, the size WM2 of the opening portion 184a of the second light shielding member 184 is equal to or less than the size Wp of the effective area 81a.

Thus, the image quality of the lensless camera 80 can be further improved.

In the imaging device (lensless camera 80) according to the embodiment, the size WM2 of the opening portion 184a of the second light shielding member 184 is larger than the size WMM of the optical modulation element (mask 82).

Thus, the image quality of the lensless camera 80 can be further improved.

In the imaging device (lensless camera 80) according to the embodiment, the second light shielding member 184 has a tapered shape at the end portion 184c on the opening portion 184a side.

Thus, the image quality of the lensless camera 80 can be further improved.

In the imaging device (lensless camera 80) according to the embodiment, the second light shielding member 184 includes another opening portion (opening portion 184b) for aligning the optical modulation element (mask 82) with respect to the solid-state imaging element (image sensor 81).

Thus, the positioning performance of the mask 82 can be further improved.

The imaging device (lensless camera 80) according to the embodiment further includes the window member 182 located on the light incident side of the effective area 81a and including the first main surface 182a facing the effective area 81a and the second main surface 182b on the opposite side of the first main surface 182a. The optical modulation element (mask 82) and the first light shielding member 183 are located on the second main surface 182b of the window member 182.

Thus, the image quality of the lensless camera 80 can be improved, and the overall height of the lensless camera 80 can be suppressed to be low.

In the imaging device (lensless camera 80) according to the embodiment, the window member 182 has an absorptance of 10% or more in the wavelength region of the light L to be imaged.

Thus, the image quality of the lensless camera 80 can be further improved.

Configuration of Imaging Device

Fig. 34 is a block diagram depicting an example of a configuration of an imaging device 200. As depicted in Fig. 34, the imaging device 200 includes an imaging section 201, a signal processing unit 202, and a memory 203.

The imaging section 201 has a configuration in which the mask is disposed in front of the image sensor as explained with reference to Figs. 7 to 33 and the like. In the imaging section 201, the light through the mask is input to the image sensor.

Observation data (corresponding to the above-described observation image) imaged by the image sensor of the imaging section 201 is input to the signal processing unit 202. The signal processing unit 202 performs various types of signal processing on the input observation data to generate restored data (corresponding to the above-described restored image). The generated restored data is output to the outside. The restored data is an image including the subject of the photographing scene, similarly to the normal lens-using camera.

The signal processing unit 202 performs processing using the imaging matrix F in signal processing for generating the restored data from the observation data. Specifically, the restored data is generated by executing processing of multiplying the observation data by an inverse matrix $F^{-1}$ of the imaging matrix F, or the like. The memory 203 stores various data such as the imaging matrix F.

The signal processing unit 202 generates the restored data by applying a unique matrix generated by a unique parameter of the imaging section 201 by using various data stored in the memory 203. By this processing, correct image restoration processing according to the configuration and characteristics unique to the imaging section 201 is executed, and correct restored data can be generated.

In the imaging device 200 configured as described above, by applying the lensless camera 80 of each of the above-described embodiments as the imaging section 201, the image quality of the imaging device 200 can be improved.

Note that, in the example of Fig. 34, a chip constituting the image sensor of the imaging section 201 and a chip constituting the signal processing unit 202 may be layered. Thus, the image quality of the imaging device 200 can be improved.

Although the embodiments of the present disclosure have been explained above, the technical scope of the present disclosure is not limited to the above-described embodiments as they are, and various modifications can be made without departing from the gist of the present disclosure. Further, the constituent elements of different embodiments and modifications may be combined as appropriate.

In addition, the effects described in the present specification are merely examples and are not limited, and other effects may be obtained.

Note that the present technique can also have the following configurations.

(1) An imaging device including:

a solid-state imaging element having an effective area in which a plurality of pixels are located in a matrix;
an optical modulation element located on a light incident side of the effective area and configured to modulate incident light; and
a first light shielding member located flush with the optical modulation element to surround a periphery of the optical modulation element in plan view.

(2) The imaging device according to (1), wherein the first light shielding member is provided with an opening portion where the optical modulation element is located, and a size of the opening portion is equal to or less than a size of the effective area.

(3) The imaging device according to (1) or (2), wherein the first light shielding member is provided with an opening portion where the optical modulation element is located, and a size of the opening portion is larger than a size of the optical modulation element.

(4) The imaging device according to any one of (1) to (3), further including:

a window member located on a light incident side of the effective area, having a first main surface facing the effective area and a second main surface located on an opposite side of the first main surface, and provided with the optical modulation element and the first light shielding member on the first main surface; and

a second light shielding member located on the second main surface of the window member and including an opening portion on a light incident side of the optical modulation element.

(5) The imaging device according to (4) wherein a size of the opening portion of the second light shielding member is equal to or greater than a size of the opening portion of the first light shielding member and is equal to or less than a size of the effective area.

(6) The imaging device according to (4), wherein a size of the opening portion of the first light shielding member is equal to or greater than a size of the opening portion of the second light shielding member and is equal to or less than a size of the effective area.

(7) The imaging device according to (6), further including another optical modulation element located at a periphery of the optical modulation element and having a two dimensional pattern that is the same as a two dimensional pattern of a part of a region of the optical modulation element.

(8) The imaging device according to any one of (4) to (7), wherein the second light shielding member has a tapered shape at an end portion on an opening portion side.

(9) The imaging device according to any one of (4) to (8), further including a plurality of third light shielding members located on a plurality of side surfaces, respectively, of the window member.

(10) The imaging device according to any one of (1) to (9), wherein the first light shielding member has a tapered shape at an end portion on an opening portion side.

(11) The imaging device according to any one of (1) to (10), wherein the first light shielding member includes another opening portion for aligning the optical modulation element with respect to the solid-state imaging element.

(12) An imaging device including:

a solid-state imaging element having an effective area in which a plurality of pixels are located in a matrix;

a window member located on a light incident side of the effective area and having a first main surface facing the effective area and a second main surface located on an opposite side of the first main surface;

an optical modulation element located on the first main surface of the window member and configured to modulate incident light; and

a second light shielding member located on the second main surface of the window member and including an opening portion on a light incident side of the optical modulation element.

(13) The imaging device according to (12), wherein a size of the opening portion of the second light shielding member is equal to or less than a size of the effective area.

(14) The imaging device according to (12) or (13), wherein a size of the opening portion of the second light shielding member is larger than a size of the optical modulation element.

(15) The imaging device according to any one of (12) to (14), wherein the second light shielding member has a tapered shape at an end portion on an opening portion side.

(16) The imaging device according to any one of (12) to (15), further including a plurality of third light shielding members located on a plurality of side surfaces, respectively, of the window member.

(17) The imaging device according to any one of (12) to (16), wherein the second light shielding member includes another opening portion for aligning the optical modulation element with respect to the solid-state imaging element.

(18) The imaging device according to any one of (1) to (3), further including a window member located on a light incident side of the effective area, having a first main surface facing the effective area and a second main surface located on an opposite side of the first main surface, and provided with the optical modulation element and the first light shielding member on the second main surface.

(19) The imaging device according to any one of (4) to (9) and (12) to (18), wherein the window member has an absorptance of 10% or more in a wavelength region of light to be imaged.

Reference Signs List

80 Lensless camera (example of imaging device)
81 Image sensor (example of solid-state imaging element)

81a Effective area
82 Mask (example of optical modulation element)
82A Mask (example of another optical modulation element)
182 Window member
182a First main surface
182b Second main surface
182c Side surface
183 First light shielding member
183a Opening portion
183b Opening portion (example of another opening portion)
183c End portion
184 Second light shielding member
184a Opening portion
184b Opening portion (example of another opening portion)
184c End portion
185 Third light shielding member
WM, WM1, WM2, WMM, Wp Size

**Claims**

1. An imaging device comprising:

   a solid-state imaging element having an effective area in which a plurality of pixels are located in a matrix;
   an optical modulation element located on a light incident side of the effective area and configured to modulate incident light; and
   a first light shielding member located flush with the optical modulation element to surround a periphery of the optical modulation element in plan view.

2. The imaging device according to claim 1, wherein the first light shielding member is provided with an opening portion where the optical modulation element is located, and a size of the opening portion is equal to or less than a size of the effective area.

3. The imaging device according to claim 1, wherein the first light shielding member is provided with an opening portion where the optical modulation element is located, and a size of the opening portion is larger than a size of the optical modulation element.

4. The imaging device according to claim 1, further comprising:

   a window member located on a light incident side of the effective area, having a first main surface facing the effective area and a second main surface located on an opposite side of the first main surface, and provided with the optical modulation element and the first light shielding member on the first main surface; and
   a second light shielding member located on the second main surface of the window member and including an opening portion on a light incident side of the optical modulation element.

5. The imaging device according to claim 4, wherein a size of the opening portion of the second light shielding member is equal to or greater than a size of the opening portion of the first light shielding member and is equal to or less than a size of the effective area.

6. The imaging device according to claim 4, wherein a size of the opening portion of the first light shielding member is equal to or greater than a size of the opening portion of the second light shielding member and is equal to or less than a size of the effective area.

7. The imaging device according to claim 6, further comprising another optical modulation element located at a periphery of the optical modulation element and having a two dimensional pattern that is the same as a two dimensional pattern of a part of a region of the optical modulation element.

8. The imaging device according to claim 4, wherein the second light shielding member has a tapered shape at an end portion on an opening portion side.

9. The imaging device according to claim 4, further comprising a plurality of third light shielding members located on a plurality of side surfaces, respectively, of the window member.

10. The imaging device according to claim 1, wherein the first light shielding member has a tapered shape at an end portion on an opening portion side.

11. The imaging device according to claim 1, wherein the first light shielding member includes another opening portion for aligning the optical modulation element with respect to the solid-state imaging element.

12. An imaging device comprising:

a solid-state imaging element having an effective area in which a plurality of pixels are located in a matrix;
a window member located on a light incident side of the effective area and having a first main surface facing the effective area and a second main surface located on an opposite side of the first main surface;
an optical modulation element located on the first main surface of the window member and configured to modulate incident light; and
a second light shielding member located on the second main surface of the window member and including an opening portion on a light incident side of the optical modulation element.

13. The imaging device according to claim 12, wherein a size of the opening portion of the second light shielding member is equal to or less than a size of the effective area.

14. The imaging device according to claim 12, wherein a size of the opening portion of the second light shielding member is larger than a size of the optical modulation element.

15. The imaging device according to claim 12, wherein the second light shielding member has a tapered shape at an end portion on an opening portion side.

16. The imaging device according to claim 12 further comprising a plurality of third light shielding members located on a plurality of side surfaces, respectively, of the window member.

17. The imaging device according to claim 12, wherein the second light shielding member includes another opening portion configured to align the optical modulation element with respect to the solid-state imaging element.

18. The imaging device according to claim 1, further comprising a window member located on a light incident side of the effective area, having a first main surface facing the effective area and a second main surface located on an opposite side of the first main surface, and provided with the optical modulation element and the first light shielding member on the second main surface.

19. The imaging device according to claim 4, wherein the window member has an absorptance of 10% or more in a wavelength region of light to be imaged.

# Fig.1

(a) LENSLESS CAMERA

(b) LENS-USING CAMERA

(c) PINHOLE CAMERA

# Fig.2

DETECTION: DA = α1 × a + β1 × b + γ1 × c

DETECTION: DB = α2 × a + β2 × b + γ2 × c

DETECTION: DC = α3 × a + β3 × b + γ3 × c

DETECTION LEVEL

POSITION ON SOLID-STATE IMAGING ELEMENT

PIXEL SIGNAL LEVEL

POSITION ON SOLID-STATE IMAGING ELEMENT

# Fig.3

# Fig.4

80 LENSLESS CAMERA

85 SUBJECT

81 IMAGE SENSOR

87 RESTORED IMAGE (FINAL IMAGE)

82 MASK

83

SIGNAL PROCESSING UNIT

86. OBSERVATION IMAGE

86. OBSERVATION IMAGE

# Fig. 5

# Fig.6

# Fig.7

# Fig.8

# Fig.9

# Fig.10

80

183b

183

81

183b

81a

82
(183a)

183b

183b

183b

# Fig.11

# Fig.12

# Fig.13

# Fig.14

# Fig.15

# Fig.16

# Fig.17

80

WM2

WMM

184

81

81a

82

184a

Wp

# Fig.18

80

# Fig.19

# Ｆ ｉ ｇ . 20

Fig.21

# Fig.22

# Fig. 23

# Fig.24

# Fig.25

# F i g . 26

# Fig.27

# Fig.28

# Fig.29

# Ｆｉｇ．30

# Fig.31

# Fig.32

# Fig.33

# F i g . 34

## INTERNATIONAL SEARCH REPORT

| International application No. |
|---|
| **PCT/JP2024/014818** |

**A. CLASSIFICATION OF SUBJECT MATTER**

*H04N 23/55*(2023.01)i; *G03B 11/00*(2021.01)i; *H04N 23/54*(2023.01)i; *H04N 23/95*(2023.01)i; *H04N 23/955*(2023.01)i; *H04N 25/70*(2023.01)i

FI: H04N23/55; G03B11/00; H04N23/54; H04N23/95; H04N23/955; H04N25/70

According to International Patent Classification (IPC) or to both national classification and IPC

**B. FIELDS SEARCHED**

Minimum documentation searched (classification system followed by classification symbols)

H04N23/55; G03B11/00; H04N23/54; H04N23/95; H04N23/955; H04N25/70

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/123318 A1 (FUJIFILM CORPORATION) 05 July 2018 (2018-07-05) paragraphs [0046]-[0047], fig. 1-2, 6 | 1-2 |
| A | | 3-19 |
| X | JP 2016-218285 A (RICOH COMPANY, LTD.) 22 December 2016 (2016-12-22) paragraphs [0009]-[0031], fig. 1-5 | 1, 10 |
| A | | 2-9, 11-19 |
| X | JP 2007-206300 A (CITIZEN ELECTRONICS CO., LTD.) 16 August 2007 (2007-08-16) paragraphs [0019]-[0064], fig. 1-6 | 1, 10 |
| A | | 2-9, 11-19 |
| A | JP 2005-065015 A (CANON KABUSHIKI KAISHA) 10 March 2005 (2005-03-10) paragraph [0051], fig. 3-5 | 11 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 June 2024** | **02 July 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT

International application No.

**PCT/JP2024/014818**

**C.    DOCUMENTS CONSIDERED TO BE RELEVANT**

| Category* | Citation of document, with indication, where appropriate, of the relevant passages | Relevant to claim No. |
|---|---|---|
| A | WO 2019/171691 A1 (SONY CORPORATION) 12 September 2019 (2019-09-12) entire text, all drawings | 1-19 |
| A | JP 2005-278093 A (KYOCERA CORPORATION) 06 October 2005 (2005-10-06) entire text, all drawings | 1-19 |
| A | JP 2019-184848 A (KIMOTO KK) 24 October 2019 (2019-10-24) entire text, all drawings | 1-19 |
| A | WO 2019/235248 A1 (SONY SEMICONDUCTOR SOLUTIONS CORPORATION) 12 December 2019 (2019-12-12) entire text, all drawings | 1-19 |

Form PCT/ISA/210 (second sheet) (July 2022)

62

## INTERNATIONAL SEARCH REPORT
### Information on patent family members

International application No.

**PCT/JP2024/014818**

| Patent document cited in search report | | | Publication date (day/month/year) | Patent family member(s) | | | Publication date (day/month/year) |
|---|---|---|---|---|---|---|---|
| WO | 2018/123318 | A1 | 05 July 2018 | US | 2019/0313018 | A1 | |
| | | | | paragraphs [0078]-[0081], fig. 1-2, 6 | | | |
| | | | | CN | 110140348 | A | |
| | | | | TW | 201841003 | A | |
| JP | 2016-218285 | A | 22 December 2016 | (Family: none) | | | |
| JP | 2007-206300 | A | 16 August 2007 | (Family: none) | | | |
| JP | 2005-065015 | A | 10 March 2005 | (Family: none) | | | |
| WO | 2019/171691 | A1 | 12 September 2019 | US | 2020/0410654 | A1 | |
| | | | | CN | 111788824 | A | |
| JP | 2005-278093 | A | 06 October 2005 | (Family: none) | | | |
| JP | 2019-184848 | A | 24 October 2019 | EP | 3779524 | A1 | |
| | | | | entire text, all drawings | | | |
| | | | | WO | 2019/198511 | A1 | |
| | | | | CN | 112041706 | A | |
| | | | | KR | 10-2020-0143411 | A | |
| WO | 2019/235248 | A1 | 12 December 2019 | US | 2021/0223512 | A1 | |
| | | | | entire text, all drawings | | | |
| | | | | DE | 112019002889 | T | |
| | | | | KR | 10-2021-0018252 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016123529 A